# EUROPEAN PATENT SPECIFICATION

(11) **EP 2 644 404 B1**
(45) Date of publication and mention of the grant of the patent: **16.08.2017**
(21) Application number: 13161027.1
(22) Date of filing: 26.03.2013
(51) Int. Cl.: B41M 7/00, C09D 11/00

(54) **INK COMPOSITION, IMAGE FORMING METHOD, AND PRINTED ARTICLE**
TINTENZUSAMMENSETZUNG, BILDERZEUGUNGSVERFAHREN UND DRUCKARTIKEL
COMPOSITION D'ENCRE, PROCÉDÉ DE FORMATION D'IMAGE ET ARTICLE IMPRIMÉ

(30) Priority: 28.03.2012 JP 2012075117; 28.03.2012 JP 2012075119; 28.03.2012 JP 2012075120; 19.02.2013 JP 2013030384
(43) Date of publication of application: 02.10.2013
(73) Proprietor: FUJIFILM Corporation, Tokyo 106-8620 (JP)
(72) Inventor: Shimohara, Norihide, Ashigarakami-gun, Kanagawa 258-8577 (JP); Nakano, Ryoichi, Ashigarakami-gun, Kanagawa 258-8577 (JP)
(74) Representative: Klunker IP Patentanwälte PartG mbB

(56) References cited:
- EP-A1- 2 395 057
- EP-A1- 2 423 276
- EP-A1- 2 423 278

## Description

### BACKGROUND OF THE INVENTION

### 1. Field of the Invention

The present invention relates to an ink composition applicable to ink jet recording, image formation using the ink composition, and a printed article formed by the ink composition.

### 2. Description of the Related Art

As image recording methods for forming an image on a recording medium such as paper based on image data signals, there are an electrophotographic method, sublimation- and fusion-type thermal transfer methods, an ink jet method, and the like.

The electrophotographic method requires a process for forming an electrostatic latent image on a photosensitive drum by charging or exposure, so the system becomes complicated. As a result, the method has a problem of the increase in production cost and the like. In addition, though the device for the thermal transfer method is inexpensive, the method uses ink ribbons. Therefore, the method has problems that the running cost is high, waste materials are produced, and the like.

On the other hand, in the ink jet method, an inexpensive device is used, and an ink is discharged only to a necessary image portion to directly form an image on a recording medium. Accordingly, the method is advantageous in that the ink can be used efficiently and the running cost is low. Moreover, the method generates little noise and is excellent as an image recording method.

Among ink compositions used for recording an image in the ink jet method, an active energy ray-curable aqueous ink composition can be appropriately used for printing an image, a pretreatment for imparting printability to a recording medium, a post-treatment for protecting and decorating a printed image, and the like. In addition, the ink composition has water as a main component and thus has excellent safety and a low viscosity, thereby being applied to high-density ink jet recording. Besides, more excellent features and possibilities are provided in this technique.

In recent years, an ink image formed on a recording medium made of a resin using an ink composition is more likely to be provided for the purpose of large-size advertising, outdoor advertising, and the like. Particularly, in the case of outdoor advertising, high water resistance is required. In addition, in a case where a large-size printed article or a number of printed articles are continuously formed, a step of removing contaminants of a printing apparatus using an organic solvent is needed. However, in a case where the organic solvent used for cleaning scatters and adheres to the formed ink image, a point to which the solvent adheres in the image with low solvent resistance is dissolved and removed, resulting in image failure such as a white void. Therefore, an ink composition capable of forming a good-quality image with water resistance and solvent resistance at high levels is required.

Examples of base constituent materials of the active energy ray-curable aqueous ink composition include water, a polymerizable substance, a polymerization initiator that initiates polymerization by generating radicals and the like by the active energy rays, and a coloring material (a pigment or a dye). Among these, the polymerizable substance or the polymerization initiator may be prepared in an emulsion state and may be present in a solution state by being imparted with water solubility by an appropriate substituent.

Examples of the active energy ray-curable aqueous ink composition having a polymerizable substance and a polymerization initiator which are soluble in water include an ink composition described in JP2005-307199A. It is considered that by the ink composition, an ink composition for ink jet recording capable of obtaining a film with excellent adhesion through light irradiation is obtained.

In addition, in JP2007-119449A and JP2000-160086A, ink compositions including an active energy ray-polymerizable substance having a specific maleimide structure are described.

### SUMMARY OF THE INVENTION

However, in the technique described in JP2005-307199A, which uses a water-soluble polymerization initiator, decomposed products of the added polymerization initiator or unreacted residues remain in the cured film, and thus has an adverse effect on the film properties and the printed article. Therefore, there is still room for improvement in water resistance of a printed image.

In JP2007-119449A, no examination is made regarding solvent resistance of a formed image, and there is room for improvement in solvent resistance. JP2000-160086A relates to a solvent-based ink composition, and no examination is made regarding use as an aqueous ink or water resistance of a formed image.

Typically, there is a phenomenon that although any of solvent resistance and water resistance of a formed image can be improved by selecting a polymer compound or solvent included in an ink composition, it is difficult to satisfy the two at high levels and enhance adhesion of the formed image to a printing medium (blocking resistance).

The present invention has been made taking the foregoing circumstances into consideration, and an object thereof is to provide an ink composition which can obtain an image having both excellent water resistance and solvent resistance and good adhesion to a recording medium (high-temperature blocking properties), and is thus appropriate for image formation using an ink jet method.

In addition, another object of the present invention is to provide an image recording method by which an image having both excellent water resistance and solvent resistance and good adhesion to a recording medium (high-temperature blocking properties) can be formed, and a printed article having an image having good adhesion to a recording medium (high-temperature blocking properties) and both excellent water resistance and solvent resistance.

Specific means for achieving the above objects are as follows.
<1> An ink composition including: (a) a polymer compound which includes a repeating unit (a-1) having a partial structure expressed by the following General Formula (1), a repeating unit (a-2) which has a hydrophilic group and accounts for 8% to 25% by mass with respect to the total mass of the copolymer compound, and a repeating unit (a-3) having a hydrophobic group, the polymer compound having a solubility parameter in an unneutralized state of 20.7 MPa^{1/2} to 23.0 MPa^{1/2}; (b) water; and (c) a water-soluble organic solvent, 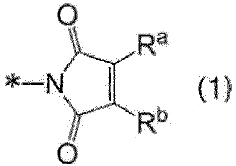 where, in the General Formula (1), R^{a} and R^{b} each independently represent a hydrogen atom or an alkyl group having 1 to 4 carbon atoms, and at least one of R^{a} and R^{b} represents an alkyl group having 1 to 4 carbon atoms, R^{a} and R^{b} may be bonded together and form a 4- to 6-membered alicyclic structure, and * represents a portion bonded to a main chain or a side chain in the polymer compound.
<2> The ink composition according to <1>, wherein the repeating unit (a-3) having the hydrophobic group is a repeating unit having a partial structure expressed by the following General Formula (2-1) and/or a repeating unit having a partial structure expressed by the following General Formula (2-2),

   *-Y(̵CH₃)ₙ (2-1)

   where, in the General Formula (2-1), Y represents an (n+1)-valent substituent, and n represents an integer of 2 to 5, 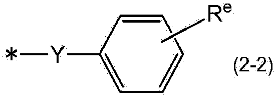 where, in the General Formula (2-2), Y represents a single bond or an alkylene group having 1 to 10 carbon atoms, the alkylene group may be substituted by an alkyl group having 1 to 4 carbon atoms or a hydroxyl group and an ether bond, a urethane bond, or a ureylene bond may be included in the alkylene group, and R^{e} is a hydrogen atom or a linear or branched alkyl group having 1 to 9 carbon atoms.
<3> The ink composition according to <2>, wherein Y in the General Formula (2-1) represents an (n+1)-valent substituent obtained by removing n hydrogen atoms from a linear or cyclic alkyl group.
<4> The ink composition according to any one of <1> to <3>, wherein the repeating unit (a-2) having the hydrophilic group is a repeating unit having at least one type of hydrophilic group selected from an alcoholic hydroxyl group, an alkyl-substituted carbamoyl group, a carboxyl group, a sulfo group, and salts thereof.
<5> The ink composition according to any one of <1> to <4>, wherein the repeating unit (a-2) having the hydrophilic group is a repeating unit having at least one type of hydrophilic group selected from a carboxyl group and salts thereof.
<6> The ink composition according to any one of <1> to <5>, wherein the solubility parameter of (a) the polymer compound in the unneutralized state is 21.2 MPa^{1/2} to 22.8 MPa^{1/2}.
<7> The ink composition according to any one of <1> to <6>, wherein the solubility parameter of (a) the polymer compound in the unneutralized state is 21.5 MPa^{1/2} to 22.5 MPa^{1/2}.
<8> The ink composition according to any one of <1> to <7>, wherein the repeating unit (a-3) having the hydrophobic group is a repeating unit derived from alkyl (meth)acrylate having 4 to 22 carbon atoms.
<9> The ink composition according to any one of <1> to <8>, wherein the repeating unit (a-1) having the partial structure expressed by the General Formula (1) is a repeating unit expressed by the following General Formula (3), 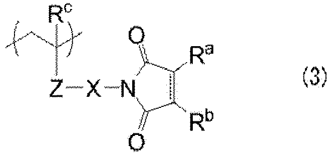 where, in the General Formula (3), R^{a} and R^{b} each independently represent a hydrogen atom or an alkyl group having 1 to 4 carbon atoms and at least one of R^{a} and R^{b} represents an alkyl group having 1 to 4 carbon atoms, R^{a} and R^{b} may be bonded together and form a 4- to 6-membered alicyclic structure, R^{c} represents a hydrogen atom or a methyl group, Z represents a single bond, -COO-**, or -CONR^{d}-**, R^{d} represents a hydrogen atom or an alkyl group having 1 to 4 carbon atoms, ** represents a position bonded to X, and X represents a divalent organic group.
<10> The ink composition according to any one of <2> to <9>, wherein the repeating unit having the partial structure expressed by the General Formula (2-1) is a repeating unit expressed by the following General Formula (4), and the repeating unit having the partial structure expressed by the General Formula (2-2) is a repeating unit expressed by the following General Formula (5), 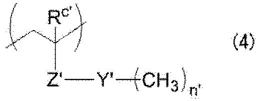 where, in the General Formula (4), R^{c'} represents a hydrogen atom or a methyl group, Z' is the same as Z in the General Formula (3), and Y' and n' are respectively the same as Y and n in the General Formula (2-1), 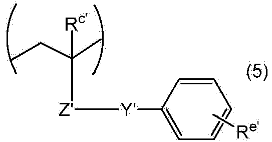 where, in the General Formula (5), R^{c'} represents a hydrogen atom or a methyl group, Z' represents -COO-** or -CONR^{d}-**, and Y' and R^{e'} are respectively the same as Y and R^{e} in the General Formula (2-2).
<11> The ink composition according to any one of <1> to <10>, wherein a weight average molecular weight of (a) the polymer compound is 5000 to 150,000.
<12> The ink composition according to any one of <1> to <11>, wherein the repeating unit (a-1) having the partial structure expressed by the General Formula (1) is included at 20% to 70% by mass with respect to the total mass of the polymer compound.
<13> The ink composition according to any one of <1> to <12>, further including: (d) a colorant.
<14> The ink composition according to any one of <1> to <13>, further including: (e) resin particles.
<15> The ink composition according to <14>, wherein a content of (e) the resin particles is 0.2% to 10% by mass with respect to the total amount of the ink composition.
<16> The ink composition according to <14> or <15>, wherein (e) the resin particles are urethane resin particles.
<17> The ink composition according to <16>, wherein the urethane resin particles are polyester-based urethane resin particles or polyether-based urethane resin particles.
<18> The ink composition according to any one of <14> to <17>, wherein a volume average particle diameter of (e) the resin particles is 20 to 200 nm.
<19> The ink composition according to any one of <1> to <18>, which is for ink jet recording.
<20> An image forming method including: an ink imparting step of imparting the ink composition according to any one of <1> to <19> onto a recording medium; and an irradiating step of irradiating the ink composition imparted onto the recording medium with active energy rays.
<21> An image forming method including: an ink imparting step of imparting the ink composition according to any one of <1> to <19> onto a recording medium; an ink drying step of drying the ink composition imparted onto the recording medium; and an irradiating step of irradiating the ink composition which is imparted onto the recording medium and is dried, with active energy rays.
<22> A printed article including: an image which is formed on an image recording medium, by the ink composition according to any one of <1> to <19>, or according to the image forming method according to <20> or <21>.

According to the present invention, the ink composition which can obtain an image having both excellent water resistance and solvent resistance and good adhesion to a recording medium (high-temperature blocking properties), and is thus appropriate for image formation using an ink jet method can be provided.

In addition, according to the present invention, the image recording method by which an image having both excellent water resistance and solvent resistance and good adhesion to a recording medium (high-temperature blocking properties) can be formed, and the printed article having an image having good adhesion to a recording medium (high-temperature blocking properties) and both excellent water resistance and solvent resistance can be provided.

### DESCRIPTION OF THE PREFERRED EMBODIMENTS

Hereinafter, an ink composition, an image forming method, and a printed article of the present invention will be described.

In the present specification, in a case where the amount of each component in the composition is mentioned, when a plurality of materials corresponding to each component in the composition are present, unless otherwise specified, the amount means the total amount of the corresponding plurality of materials that are present in the composition.

In addition, a solid content in the ink composition of the present invention means the total mass of all components excluding a solvent from among components included in the ink composition at 25°C. The solid content in the present specification also includes liquid components such as low-molecular-weight components except for the solvent.

In the present specification, a numerical value range represented by using "∼" refers to a range including numerical values described before and after the "∼" as the minimum value and the maximum value, respectively.

In the present specification, the term "step" includes not only an independent step, but also a step that is not clearly distinguished from other steps as long as the step can achieve its desired action.

In the present specification, the value of a solubility parameter may refer to a "SP value". The SP value described in the present invention is a solubility parameter calculated by Okitsu's method (Adhesives, Vol. 38, No. 6, p. 6 (1994), Kobunshi Kankokai), and indicates an estimated value that is obtained by providing a molar attraction constant and a molar volume per unit in a molecular structure proposed by Okitsu. In addition, in calculating the SP value of a polymer, the SP value is calculated in a state where a carboxylic acid in (meth)acrylic acid is unneutralized.

### [Ink Composition]

The ink composition of the present invention is an ink composition containing: (a) a polymer compound which includes a repeating unit (a-1) having a partial structure expressed by the following General Formula (1), a repeating unit (a-2) which has a hydrophilic group and accounts for 8% to 25% by mass with respect to the total mass of the copolymer compound, and a repeating unit (a-3) having a hydrophobic group, and has a solubility parameter (SP value) in an unneutralized state of 20.7 MPa^{1/2} to 23.0 MPa^{1/2}; (b) water; and (c) a water-soluble organic solvent.

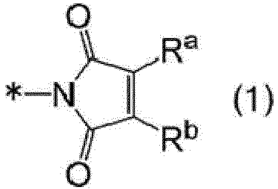

(In the General Formula (1), R^{a} and R^{b} each independently represent a hydrogen atom or an alkyl group having 1 to 4 carbon atoms, and at least one of R^{a} and R^{b} represents an alkyl group having 1 to 4 carbon atoms. R^{a} and R^{b} may be bonded together and form a 4- to 6-membered alicyclic structure. * represents a portion bonded to a main chain or a side chain in the polymer compound.)

In addition, in the present specification, (a) the copolymer compound according to the present invention, which includes the repeating unit (a-1) having the partial structure expressed by the above General Formula (1), the repeating unit (a-2) having a hydrophilic group, and the repeating unit (a-3) having a hydrophobic group may refer to "(a) a specific copolymer".

The ink composition of the present invention contains each of the components described above, and thus can form an image having both excellent water resistance and solvent resistance and having good adhesion to a recording medium.

Here, in the present invention, water resistance and solvent resistance of an image mean durability of the formed image against water and solvent.

The action mechanism of the present invention is not clear, but is assumed by the inventors as follows.

That is, typically, water resistance and solvent resistance of a film that a polymer compound forms are controlled by a balance between hydrophilic groups and hydrophobic groups included in the polymer compound. In a case of a high-polarity polymer compound that includes many hydrophilic group, there is a tendency for solvent resistance to be increased and water resistance to be reduced. On the other hand, in a case of a low polarity with many hydrophobic group included, although water resistance is improved, solvent resistance is degraded, and adhesion to an ink-nonabsorbing recording medium is degraded.

Since (a) the specific copolymer according to the present invention includes the repeating unit (a-1) having the partial structure expressed by the above General Formula (1), a cross-linking effect caused by the partial structure expressed by the General Formula (1) and an insolubilizing effect due to the enhancement in polarity can be exhibited together. Moreover, it is thought that the repeating unit (a-2) having a hydrophilic group and the repeating unit (a-3) having a hydrophobic group are contained with a good balance to control the SP value of (a) the specific copolymer to be in an extremely specific range, thereby achieving high levels of both the water resistance and the solvent resistance of the formed image. Furthermore, it is thought that adhesion to a recording medium is also enhanced by the cross-linking effect caused by the partial structure expressed by the General Formula (1).

In addition, it is thought that an interaction with a pigment or a pigment dispersant is suppressed by controlling the polarity of the polymer compound to be in a specific range, thereby improving preservation stability of ink.

The ink composition of the present invention contains (a) the specific copolymer, (b) water, and (c) the water-soluble organic solvent, and may further include various liquid or solid compounds as additives if necessary, as long as the effects of the present invention are not damaged. Examples of the additives include (d) a colorant and (e) resin particles. When the ink composition of the present invention includes (d) the colorant, a colored image can be obtained using the ink composition of the present invention. In addition, by including (e) the resin particles, adhesion of an image to an ink-non-permeable base material such as polyethylene terephthalate can further be increased. As described later, other components may also be included for various purposes.

Hereinafter, the ink composition of the present invention (hereinafter, simply referred to as "ink composition") will be described in detail.

### [(a) Specific Copolymer]

Each of the repeating units constituting (a) the specific copolymer included in the ink composition of the present invention and properties of (a) the specific copolymer will be described in detail.

### (Repeating Unit (a-1) Having Partial Structure Expressed by General Formula (1))

(a) The specific copolymer includes the repeating unit (a-1) having the partial structure expressed by the following General Formula (1).

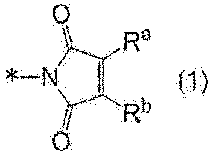

In the General Formula (1), R^{a} and R^{b} each independently represent a hydrogen atom or an alkyl group having 1 to 4 carbon atoms, and at least one of R^{a} and R^{b} represents an alkyl group having 1 to 4 carbon atoms. R^{a} and R^{b} may be bonded together and form a 4- to 6-membered alicyclic structure. * represents a portion bonded to a main chain or a side chain in the polymer compound.

In the General Formula (1), the alkyl group having 1 to 4 carbon atoms, represented by R^{a} or R^{b} may have a straight chain structure or a branched structure. Specific examples of the alkyl group include a methyl group, an ethyl group, a propyl group, an isopropyl group, a butyl group, an isobutyl group, a sec-butyl group, and a t-butyl group. Among the alkyl groups, an alkyl group having 1 to 2 carbon atoms (a methyl group and an ethyl group) is preferable, and an alkyl group having 1 carbon atom (a methyl group) is particularly preferable.

In the General Formula (1), the alkyl group represented by R^{a} or R^{b} may have a substituent or may not have substituents, but preferably does not have substituents.

R^{a} and R^{b} may be bonded together and form a 4- to 6-membered alicyclic structure.

It is preferable that both R^{a} and R^{b} be an alkyl group having 1 to 4 carbon atoms, or R^{a} and R^{b} be bonded together and form a 4- to 6-membered alicyclic structure, it is more preferable that both R^{a} and R^{b} be an alkyl group having 1 to 2 carbon atoms, and it is even more preferable that both R^{a} and R^{b} be an alkyl group having 1 carbon atom.

Hereinafter, specific examples of the partial structure expressed by the General Formula (1) are described, but the present invention is not limited thereto.

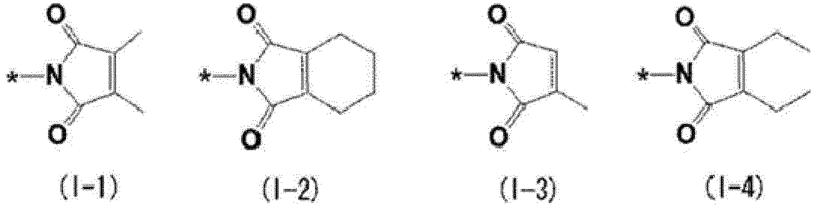

(a) The specific copolymer may have a plurality of the partial structures expressed by the General Formula (1) as side chains, and in a case where the plurality of the partial structures are present, the partial structures may be the same or different.

The repeating unit (a-1) having the partial structure expressed by the General Formula (1) is preferably a repeating unit expressed by the following General Formula (3).

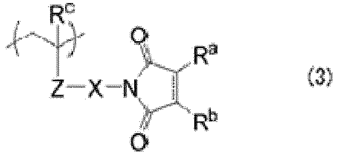

In the General Formula (3), R^{a} and R^{b} each independently represent a hydrogen atom or an alkyl group having 1 to 4 carbon atoms, and at least one of R^{a} and R^{b} represents an alkyl group having 1 to 4 carbon atoms. R^{a} and R^{b} may be bonded together and form a 4- to 6-membered alicyclic structure. R^{c} represents a hydrogen atom or a methyl group. Z represents a single bond, -COO-**, or -CONR^{d}-**, R^{d} represents a hydrogen atom or an alkyl group having 1 to 4 carbon atoms, and ** represents a bonding position to X. X represents a divalent organic group.

In the General Formula (3), preferable forms of R^{a} and R^{b} are the same as R^{a} and R^{b} in the General Formula (1).

In the General Formula (3), R^{c} is preferably a methyl group.

In the General Formula (3), Z is preferably -COO-**.

In addition, the alkyl group having 1 to 4 carbon atoms, represented by R^{d} in -CONR^{d}-** may have a straight chain structure or a branched structure. Specific examples of the alkyl group include a methyl group, an ethyl group, a propyl group, an isopropyl group, a butyl group, an isobutyl group, a sec-butyl group, and a t-butyl group. R^{d} is preferably a hydrogen atom or an alkyl group having 1 to 2 carbon atoms, that is, a methyl group or an ethyl group, and is particularly preferably a hydrogen atom. In a case where R^{d} represents an alkyl group, the alkyl group may have a substituent or may not have substituents, but preferably does not have substituents.

In the General Formula (3), a divalent organic group represented by X may be an alkylene group or an aralkylene group, and is preferably an alkylene group having 2 to 20 carbon atoms or an aralkylene group having 6 to 12 carbon atoms. X is more preferably an alkylene group.

In the case where X represents an alkylene group, the number of carbon atoms of the alkylene group is more preferably 2 to 12, and the number of carbon atoms thereof is even more preferably 2 to 8. By setting the number of carbon atoms of the alkylene group represented by X to be in this range, motility of the partial structure expressed by the General Formula (1), which is present at the end of a side chain in (a) the specific copolymer is enhanced, and thus the effects of the present invention are further enhanced.

The alkylene group represented by X may have a straight chain structure, may have a branched alkylene chain, or may have a cyclic structure. In addition, the alkylene group may include a bond selected from -O-, -COO-, -OC(=O)-, and -CONH- in the alkylene chain. In addition, the alkylene group may be substituted by an alkyl group having 4 carbon atoms or less, a hydroxyl group, or a chlorine atom.

Regarding the repeating units expressed by the General Formula (3), it is preferable that R^{a} and R^{b} each independently be an alkyl group having 1 to 2 carbon atoms, R^{c} be a methyl group, Z be -COO-**, and X be an alkylene group having 2 to 12 carbon atoms.

The content of the repeating unit (a-1) having the partial structure expressed by the General Formula (1) included in (a) the specific copolymer (preferably, the repeating unit expressed by the General Formula (3)) is appropriately selected depending on properties desired by a cured film (image) formed by the ink composition. That is, the content of the repeating unit (a-1) having the partial structure expressed by the General Formula (1) is preferably high in order to obtain a firm ink image, and is preferably low in order to obtain a flexible cured film.

Considering this, the content of the repeating unit (a-1) having the partial structure expressed by the General Formula (1) is, with respect to the total mass of (a) the specific copolymer, preferably 5% to 90% by mass, is more preferably 20% to 70% by mass, is even more preferably 30% to 65% by mass, and is particularly preferably 40% to 60% by mass.

(a) The specific copolymer may include only one type of repeating unit (a-1) having the partial structure expressed by the General Formula (1), or may include two or more types thereof.

The repeating unit (a-1) having the partial structure expressed by the General Formula (1) can be introduced to (a) the specific copolymer by copolymerizing a monomer having the partial structure expressed by the General Formula (1) and using the monomer as one of copolymer components. In the case where the repeating unit (a-1) having the partial structure expressed by the General Formula (1) is the repeating unit expressed by the General Formula (3), a monomer expressed by the following General Formula (3') may be used for synthesis of (a) the specific copolymer.

In addition, the repeating unit (a-1) having the partial structure expressed by the General Formula (1) can be introduced by a method using a polymerization reaction. Examples of the method include a method of causing a prepolymer having a primary amino group to react with a corresponding anhydride to obtain the monomer, and a method of causing a compound having a functional group that forms a bond to a functional group in a prepolymer through a reaction therebetween and the partial structure expressed by the General Formula (1) to react with the prepolymer.

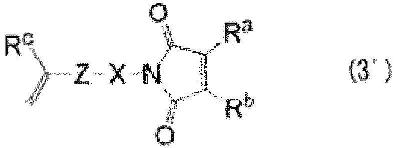

In the General Formula (3'), R^{a}, R^{b}, R^{c}, Z, and X are synonymous with R^{a}, R^{b}, R^{c}, Z, and X in the General Formula (3), and the preferable ranges thereof are the same.

Preferable examples of the monomer expressed by the General Formula (3') include the following monomers (3'-1) to (3'-11), but the present invention is not limited thereto.

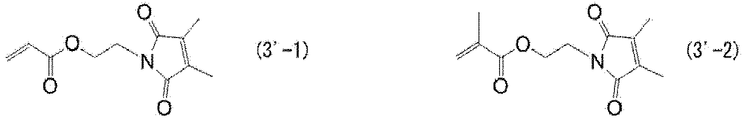

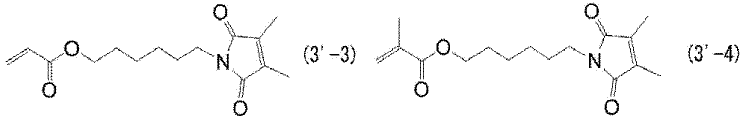

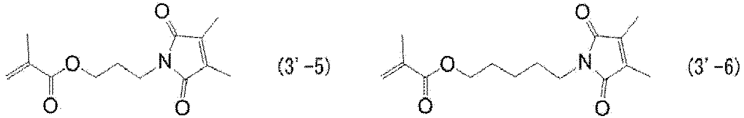

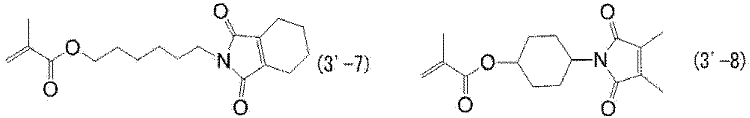

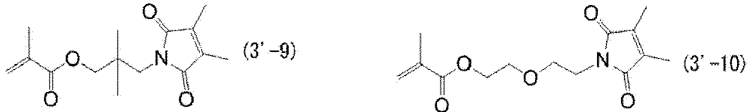

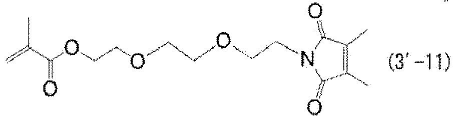

The monomers including the partial structure expressed by the General Formula (1), which are represented by the monomers (3'-1) to (3'-11) can be manufactured with reference to the methods described in, for example, JP1977-988A (JP-S52-988A) and JP1992-251258A (JP4-251258A).

### (Repeating Unit (a-2) Having Hydrophilic Group)

In the present invention, (a) the specific copolymer includes 8% to 25% by mass of the repeating unit (a-2) having a hydrophilic group with respect to the total mass of (a) the specific copolymer.

The hydrophilic group is not particularly limited as long as the hydrophilic group is a group having a function of increasing hydrophilic properties of (a) the specific copolymer, and may be a nonionic hydrophilic group or ionic hydrophilic group (for example, an anionic hydrophilic group or a cationic hydrophilic group).

For example, the nonionic hydrophilic group is not particularly limited, and examples thereof include nonionic hydrophilic groups such as a residue obtained by removing a hydrogen atom from a heterocyclic structure including a nitrogen atom or an oxygen atom, an amide group, a carbamoyl group, an alkyl-substituted carbamoyl group, an alcoholic hydroxyl group, or a group having a polyalkyleneoxy structure.

In the residue obtained by removing a single hydrogen atom from a heterocyclic structure including a nitrogen atom or an oxygen atom, examples of the heterocyclic structure include: lactones such as a γ-butyrolactone; cyclic ureas such as 2-pyrrolidone and ethylene urea; cyclic carbonates such as ethylene carbonate and propylene carbonate; and cyclic ethers such as tetrahydrofuran and 1,4-dioxane.

As the amide group, an amide group having 2 to 10 carbon atoms is preferable, and it is preferable that a hydrogen atom be bonded to a nitrogen atom in the amide group.

Examples of the alkyl-substituted carbamoyl group include a monoalkylcarbamoyl group in which a hydrogen atom bonded to a nitrogen atom included in a carbamoyl group is substituted by an alkyl group, and a dialkylcarbamoyl group in which two hydrogen atoms bonded to a nitrogen atom included in a carbamoyl group are substituted by an alkyl group. The alkyl group may further have a substituent such as a hydroxyl group. Among the alkyl-substituted carbamoyl groups, a monoalkylcarbamoyl group which is substituted by an alkyl group having 1 to 4 carbon atoms substituted by an alkyl group having 1 to 8 carbon atoms or a hydroxyl group is preferable.

A group having a polyalkyleneoxy structure is not particularly limited, and a polyalkyleneoxy structure having an alkyleneoxy group having 1 to 4 carbon atoms as a repeating unit is preferable. The alkyleneoxy group in the polyalkyleneoxy structure may be of a single type or a combination of a plurality of alkyleneoxy groups. The end group of the polyalkyleneoxy structure is preferably a hydroxyl group or an alkoxy group, and more preferably, is a hydroxyl group or a methoxy group.

The ionic hydrophilic group is not particularly limited, and examples thereof include a carboxyl group, a sulfo group, a phosphate group, a phosphonic acid group, a phenolic hydroxyl group, and a quaternary ammonium group. The ionic hydrophilic group may form a salt.

In the case where the ionic hydrophilic group forms a salt, examples of a salt with a counterion include an alkali metal salt (Li, Na, K, or the like) or an onium salt such as an ammonium salt, a pyridinium salt, or a phosphonium salt. Among these, an alkali metal salt (Li, Na, K, or the like) or an ammonium salt is preferable.

Among the hydrophilic groups, an amide group, a carbamoyl group, an alkyl-substituted carbamoyl group, an alcoholic hydroxyl group, or a group having a polyalkyleneoxy structure, a carboxyl group, a sulfo group, and salts thereof are preferable, and an alcoholic hydroxyl group, an alkyl-substituted carbamoyl group, a carboxyl group, a sulfo group, and salts thereof are more preferable. A carboxyl group and a salt thereof are particularly preferable.

As the repeating unit (a-2) having the hydrophilic group, a repeating unit expressed by the following General Formula (6) is preferable.

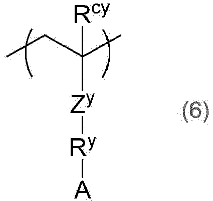

In the General Formula (6), R^{cy} represents a hydrogen atom or a methyl group. Z^{y} represents -COO-***, -CONR^{dy}-***, or a single bond, and R^{dy} represents a hydrogen atom or an alkyl group having 1 to 4 carbon atoms. R^{y} represents a group selected from the group consisting of a single bond, an alkylene group, an arylene group, and an aralkylene group. A represents a hydrophilic group. In addition, *** represents a position where Z^{y} is bonded to R^{y}.

The alkyl group having 1 to 4 carbon atoms, represented by R^{dy} may have a straight chain structure or a branched structure. Specifically, there are a methyl group, an ethyl group, a propyl group, an isopropyl group, a butyl group, an isobutyl group, a sec-butyl group, and a t-butyl group. R^{dy} is preferably a hydrogen atom or an alkyl group having 1 to 2 carbon atoms (that is, a methyl group or an ethyl group), and particularly preferably, is a hydrogen atom.

R^{dy} may or may have a substituent or may not have substituents, but preferably does not have substituents. Examples of a substituent that may be included in R^{dy} include an aryl group having 6 to 8 carbon atoms, an alkoxy group having 1 to 8 carbon atoms, a hydroxyl group, a carboxyl group, and a halogen atom (F, CI, Br, I or the like).

In the General Formula (6), R^{y} represents a group selected from the group consisting of a single bond, an alkylene group, an arylene group, and an aralkylene group, and an alkylene group having 1 to 20 carbon atoms, an arylene group having 6 to 20 carbon atoms, or an aralkylene group having 7 to 20 carbon atoms is preferable.

In the case where R^{y} is a group selected from the group consisting of an alkylene group, an arylene group, and an aralkylene group, the group may have a substituent or may not have substituents. In addition, an alkylene group, an arylene group, and an aralkylene group represented by R^{y} may have an ether bond, an ester bond, an amide bond, or a urethane bond present in the structure.

In the General Formula (6), R^{y} is preferably a single bond.

In the case where R^{y} is a group selected from the group consisting of an alkylene group, an arylene group, and an aralkylene group, the group may further have a substituent. Examples of the substituent include an aryl group having 6 to 8 carbon atoms, an alkoxy group having 1 to 8 carbon atoms, a hydroxyl group, a carboxyl group, and a halogen atom (F, CI, Br, I, or the like).

In a case where R^{y} is an alkylene group having 1 to 20 carbon atoms, the alkylene group may have a straight chain structure, a branched structure, or a cyclic structure. The number of carbon atoms in the case where R^{y} is an alkylene group is more preferably 2 to 12, and is even more preferably 2 to 8. Specific examples of the alkylene group of R^{y} include -CH₂-, -C₂H₄-, -C(CH₃)₂-CH₂-, -CH₂C(CH₃)₂CH₂-, -C₆H₁₂-, -C₄H₇(C₄H₉)C₄H₈-, C₁₈H₃₆-, a 1,4-trans-cyclohexylene group, -C₂H₄-OCO-C₂H₄-, -C₂H₄-OCO-, -C₂H₄-O-C₅H₁₀-, -CH₂-O-C₅H₉(C₅H₁₁)-, -C₂H₄-CONH-C₂H₄-, -C₄H₈-OCONH-C₆H₁₂-, -CH₂-OCONHC₁₀H₂₀-, and -CH₂CH(OH)CH₂-.

In a case where R^{y} is an arylene group having 6 to 20 carbon atoms, the number of carbon atoms of the arylene group is preferably 6 to 18, and is more preferably 6 to 14, and is particularly preferably 6 to 10. Specific examples of the arylene group represented by R^{y} include a phenylene group, a biphenylene group, C₆H₄-CO-C₆H₄-, and a naphthylene group.

In a case where R^{y} is an aralkylene group having 7 to 20 carbon atoms, the number of carbon atoms of the aralkylene group is preferably 7 to 18, and is more preferably 7 to 14, and is particularly preferably 7 to 10. Specific examples of the aralkylene group represented by R^{y} include -C₃H₆-C₆H₄-, -C₂H₄-C₆H₄-C₆H₄-, -CH₂-C₆H₄-C₆H₄-C₂H₄-, and -C₂H₄-OCO-C₆H₄-.

Examples of a hydrophilic group represented by A in the General Formula (6) include the hydrophilic groups described above, and the preferable ranges thereof are the same.

In a case where (a) the specific copolymer has the repeating unit expressed by the General Formula (6), the content of the repeating unit expressed by the General Formula (6) in (a) the specific copolymer is as follows.

In a case where the hydrophilic group A in the General Formula (6) is an ionic hydrophilic group, the content of the repeating unit expressed by the General Formula (6) is, with respect to (a) the specific copolymer, preferably 8% to 25% by mass, more preferably 10% to 22% by mass, and particularly preferably 10 to 20% by mass.

In a case where the hydrophilic group A in the General Formula (6) is a nonionic hydrophilic group, the content thereof is, with respect to (a) the specific copolymer, preferably 8% to 25% by mass, more preferably 15% to 25% by mass, and particularly preferably 20 to 25% by mass.

The repeating unit expressed by the General Formula (6) is derived from a monomer expressed by the following General Formula (6'), and by including the monomer as a copolymer component, the repeating unit (a-2) is introduced to (a) the specific copolymer.

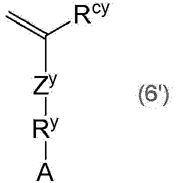

In the General Formula (6'), R^{cy}, Z^{y}, R^{y}, and A are synonymous with R^{cy}, Z^{y}, R^{y}, and A in the General Formula (6), and the preferable ranges thereof are the same.

Preferable examples of the monomer expressed by the General Formula (6') include the following monomer compounds, but the present invention is not limited thereto.

Examples thereof include methoxypolyethylene glycol (meth)acrylate, polyethylene glycol (meth)acrylate, polypropylene glycol (meth)acrylate, poly(ethylene glycol-co-propylene glycol) (meth)acrylate, 2-hydroxyethyl (meth)acrylate, glycerol (meth)acrylate (meth)acryloyloxyethylethylene urea, vinyl pyrrolidone, 3-(meth)acryloyloxy-γ-butyrolactone, acrylamide, tert-butylacrylamide, N,N-dimethyl(meth)acrylamide, diacetone acrylamide, sodium (meth)acrylate, potassium (meth)acrylate, tetrabutylammonium (meth)acrylate, mono(meth)acryloyloxyethyl succinate, sodium mono(meth)acryloyloxyethyl succinate, sodium mono(meth)acryloyloxyethyl phthalate, (meth)acryloyloxyethyl phosphate, sodium 2-acrylamido-2-methylpropanesulfonate, 2-acrylamido-2-methylpropanesulfonic acid, styrenesulfonic acid, sodium styrenesulfonate, and vinyl benzoic acid.

The monomers expressed by the General Formula (6') may be commercially available compounds, and produced by well-known methods that are commonly used.

Also, in the present invention, besides the monomers expressed by the General Formula (6'), an unsaturated dicarboxylic acid such as maleic acid, maleic acid anhydride, or fumaric acid and anhydrides thereof, or dicarboxylate salts derived from these may be preferably used.

The number of hydrophilic groups included in (a) the specific copolymer is not limited, and the number may be appropriately selected depending on the types of hydrophilic groups, the molecular weight of (a) the specific copolymer, and the like.

It is preferable that the content of the hydrophilic groups in (a) the specific copolymer be the number at which (a) the specific copolymer exhibits water solubility. Here, that (a) the specific copolymer exhibits water solubility means that (a) 3% by mass or higher of the specific copolymer is capable of being dissolved in water at 25°C.

The content of the repeating unit (a-2) having a hydrophilic group in (a) the specific copolymer is 8% to 25% by mass with respect to the total mass of (a) the specific copolymer. Since the content of the repeating unit (a-2) having a hydrophilic group is in the above range, the polarity of (a) the specific copolymer according to the present invention is appropriately maintained, thereby obtaining appropriate water resistance.

A preferable range of the content of the repeating unit (a-2) having a hydrophilic group in (a) the specific copolymer is preferably from 10% to 23% by mass and is more preferably from 10% to 20% by mass from the viewpoint of enhancing water resistance.

(a) The specific copolymer may include only one type of repeating unit (a-2) having a hydrophilic group, or may include two or more types thereof.

### (Repeating Unit (a-3) Having Hydrophobic Group)

(a) The specific copolymer includes the repeating unit (a-3) having a hydrophobic group. Since the repeating unit having a hydrophobic group is included, the polarity of (a) the specific copolymer is appropriately maintained. Therefore, an ink image formed by using the ink composition of the present invention has excellent water resistance and has excellent adhesion to a nonabsorbing recording medium.

From the viewpoint of reducing the polarity of the copolymer, the range of the repeating unit (a-3) having a hydrophobic group is preferably 5% to 72% by mass, is more preferably 5% to 65% by mass, is even more preferably 20% to 65% by mass, and is particularly preferably 25% to 60% by mass with respect to (a) the specific copolymer.

As the repeating unit (a-3) having a hydrophobic group, a repeating unit which is derived from a vinyl monomer so that, in a case where a homopolymer having a weight average molecular weight of 10,000 or higher is configured only by the repeating unit (a-3), the solubility of the homopolymer in water at 25°C is less than 1.0% by mass is preferable, and examples thereof include a repeating unit derived from a monomer selected from an alkyl ester of (meth)acrylic acid and an aralkyl ester of (meth)acrylic acid.

From the viewpoint of adjusting the polarity of (a) the specific copolymer to be in an appropriate range, as the hydrophobic group, an alkyl group having 4 to 22 carbon atoms in total is preferable, an alkyl group having 8 to 22 carbon atoms is more preferable, and an alkyl group having 8 to 14 carbon atoms is even more preferable. Particularly, in a case where the repeating unit (a-3) is a repeating unit derived from an alkyl ester of acrylic acid, the number of carbon atoms of the alkyl group is preferably 4 to 22, and is more preferably 4 to 13. In addition, in a case where the repeating unit (a-3) is a repeating unit derived from an alkyl ester of methacrylic acid, the number of carbon atoms of the alkyl group is preferably 4 to 22, and is more preferably 4 to 10.

The alkyl group may have a straight chain shape or be branched, or may be cyclic. In addition, an aralkyl ester such as a benzyl group or a phenoxyethyl group may be used.

Specifically, it is preferable that the repeating unit (a-3) having a hydrophobic group be a repeating unit having a partial structure expressed by the following General Formula (2-1) and/or a repeating unit having a partial structure expressed by the following General Formula (2-2).

*-Y(̵CH₃)ₙ (2-1)

In the General Formula (2-1), Y represents an (n+1)-valent substituent, and n represents an integer of 2 to 5.

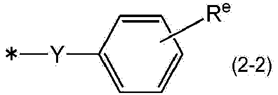

In the General Formula (2-2), Y represents a single bond or an alkylene group having 1 to 10 carbon atoms. The number of carbon atoms of the alkylene group represents the number of carbon atoms constituting a main chain. The alkylene group may be substituted by an alkyl group having 1 to 4 carbon atoms or a hydroxyl group, and an ether bond, a urethane bond, or a ureylene bond may be included in the alkylene group. Here, the number of carbon atoms of the substituent is not included in the number of carbon atoms of the alkylene group. R^{e} is a hydrogen atom or a linear or branched alkyl group having 1 to 9 carbon atoms.

Since (a) the specific copolymer of the present invention includes the repeating unit (a-3) having the partial structure expressed by the General Formula (2-1) or the General Formula (2-2), which is a low-polarity component, in addition to the repeating unit (a-1) having the partial structure expressed by the General Formula (1), which is a high-polarity component, and the repeating unit (a-2) having the hydrophilic group at an appropriate composition ratio, the SP value of (a) the specific copolymer is easily adjusted to be in a range described later.

### (Repeating Unit Having Partial Structure Expressed by General Formula (2-1))

Since (a) the specific copolymer according to the present invention has a bulky partial structure expressed by the General Formula (2-1), the glass-transition temperature (Tg) of the ink composition is increased, and thus the diffusibility of the ink composition itself can be controlled to be in an appropriate range. Therefore, high-temperature blocking properties of an image obtained by using the ink composition can be easily improved.

Y preferably represents an (n+1)-valent substituent obtained by removing n hydrogen atoms from a linear or cyclic alkyl group.

In the General Formula (2-1), the alkyl group expressed by Y is preferably a linear alkyl group having 1 to 7 carbon atoms, is more preferably a linear alkyl group having 1 to 4 carbon atoms from the viewpoint of degrading rigidity, and is even more preferably a linear alkyl group having 1 to 2 carbon atoms.

In addition, in the General Formula (2-1), the alkyl group expressed by Y is preferably a cyclic alkyl group having 3 to 7 carbon atoms, and is more preferably a cyclic alkyl group having 6 to 7 carbon atoms from the viewpoint of bulkiness and high rigidity. In addition, a cross-linking structure such as bicyclo structure may be used.

In the General Formula (2-1), the alkyl group expressed by Y may have a substituent. Examples of the substituent include a hydroxyl group or a halogen atom. In addition, the alkyl group may have a carbonyl group in an alkyl chain.

In addition, in the General Formula (2-1), Y may be an (n+1)-valent substituent having a combination of at least two types selected from the group consisting of linear and cyclic alkyl groups.

Hereinafter, specific examples of the partial structure expressed by the General Formula (2-1) are described, but the present invention is not limited thereto.

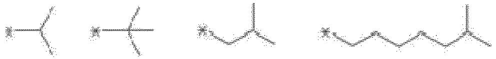

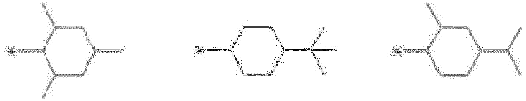

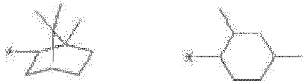

In the General Formula (2-1), n is preferably an integer of 2 to 4, and n is more preferably 2 or 3.

The content of the repeating unit (a-3) having the partial structure expressed by the General Formula (2-1) in the present invention is, with respect to the total mass of (a) the specific copolymer, preferably 5% to 70% by mass, is more preferably 5% to 60% by mass, and is most preferably 5% to 50% by mass.

(a) The specific copolymer may include only one type of repeating unit (a-3) having the partial structure expressed by the General Formula (2-1), or may include two or more types thereof.

The repeating unit (a-3) having the partial structure expressed by the General Formula (2-1) is preferably a repeating unit expressed by the following General Formula (4).

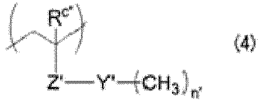

In the General Formula (4), R^{c'} represents a hydrogen atom or a methyl group, and a methyl group is more preferable from the viewpoint of high-temperature blocking properties. Z' is the same as Z in the General Formula (3), and the preferable range thereof is the same. In addition, Y' and n' are respectively the same as Y and n in the General Formula (2-1), and the preferable ranges thereof are the same.

### (Repeating Unit Having Partial Structure Expressed by General Formula (2-2))

Since (a) the specific copolymer according to the present invention has a repeating unit including an aromatic ring as expressed by the General Formula (2-2), an image having excellent glossiness can be formed.

In the General Formula (2-2), in a case where Y represents an alkylene group having 1 to 10 carbon atoms, an ether bond, a urethane bond, or a ureylene bond may be included in the alkylene group.

In addition, in the General Formula (2-2), Y represents an alkylene group having 1 to 4 carbon atoms, and an ether bond is more preferably included in the alkylene group.

An alkyl group of R^{e} may further have a substituent. Examples of the substituent of the alkyl group include a hydroxyl group, a halogen atom, an alkoxy group having 1 to 4 carbon atoms, and an alkoxycarbonyl group having 1 to 4 carbon atoms.

R^{e} is preferably a hydrogen atom or a linear or branched alkyl group having 1 to 4 carbon atoms.

Hereinafter, specific examples of the partial structure expressed by the General Formula (2-2) are described, and the present invention is not limited thereto.

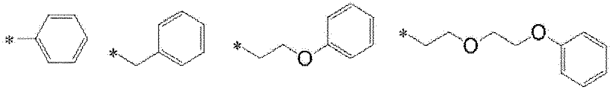

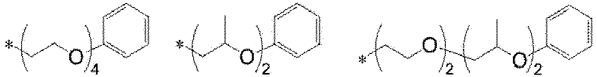

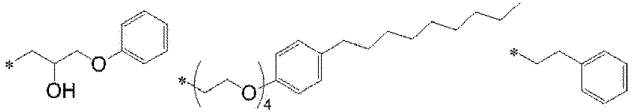

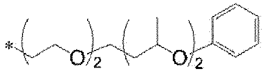

The repeating unit (a-3) having the partial structure expressed by the General Formula (2-2) is preferably a repeating unit expressed by the following General Formula (5).

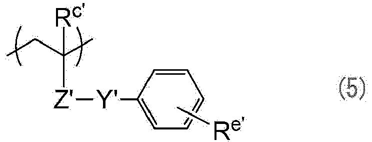

In the General Formula (5), R^{c'} represents a hydrogen atom or a methyl group. From the viewpoint of enhancing water resistance and solvent resistance, R^{c'} is preferably a methyl group.

In the General Formula (5), Z' represents -COO-** or -CONR^{d}-**. From the viewpoint of enhancing water resistance and solvent resistance, Z' is preferably -COO-**.

In the General Formula (5), Y' and R^{e'} are respectively the same as Y and R^{e} in the General Formula (2-2), and the preferable ranges thereof are the same.

The content of the repeating unit (a-3) having the partial structure expressed by the General Formula (2-2) in the present invention is, with respect to the total mass of (a) the specific copolymer, preferably 5% to 70% by mass, is more preferably 5% to 60% by mass, and is most preferably 5% to 50% by mass.

(a) The specific copolymer may include only one type of repeating unit (a-3) having the partial structure expressed by the General Formula (2-2), or may include two or more types thereof.

The repeating unit (a-3) that may be included in (a) the specific copolymer according to the present invention is exemplified as follows, but the (a-3) of the present invention is not limited thereto. Specific examples of the (a-3) include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethylhexyl (meth)acrylate, octyl (meth)acrylate, decyl (meth)acrylate, dodecyl (meth)acrylate, stearyl (meth)acrylate, and cyclohexyl methacrylate. Among these, (meth)acrylic acid esters such as n-propyl methacrylate, isopropyl methacrylate, n-butyl (meth)acrylate, isobutyl (meth)acrylate, tert-butyl (meth)acrylate, n-hexyl (meth)acrylate, 2-ethylhexyl (meth)acrylate, octyl (meth)acrylate, benzyl methacrylate, phenoxy ethyl (meth)acrylate, tetrahydrofurfuryl (meth)acrylate, and acetoacetoxyethyl (meth)acrylate, styrenes such as styrene, α-methylstyrene, and 4-methylstyrene, and vinyl ethers such as chloroethyl vinyl ether may be included. Among these, (meth)acrylic acid esters substituted by an alkyl group having 5 to 22 carbon atoms in total, such as n-propyl (meth)acrylate, isopropyl (meth)acrylate, n-butyl (meth)acrylate, isobutyl (meth)acrylate, tert-butyl (meth)acrylate, n-hexyl (meth)acrylate, 2-ethylhexyl (meth)acrylate, octyl (meth)acrylate, decyl (meth)acrylate, dodecyl (meth)acrylate, stearyl (meth)acrylate, and cyclohexyl methacrylate are preferable, and n-propyl methacrylate, isopropyl methacrylate, n-butyl (meth)acrylate, isobutyl (meth)acrylate, tert-butyl (meth)acrylate, n-hexyl (meth)acrylate, 2-ethylhexyl (meth)acrylate, octyl (meth)acrylate, benzyl methacrylate, phenoxy ethyl (meth)acrylate, and the like are more preferable. In addition, n-butyl methacrylate, isobutyl (meth)acrylate, tert-butyl (meth)acrylate, cyclohexyl methacrylate, isobornyl methacrylate, 2-ethylhexyl methacrylate, and phenoxy ethyl (meth)acrylate are particularly preferable.

(a) The specific copolymer may include only one type of repeating unit (a-3), or may include two or more types thereof.

### (Repeating Unit (a-4) Having Hydrophobic Group)

(a) The specific copolymer according to the present invention may include: the repeating unit (a-1) having the partial structure expressed by the General Formula (1); the repeating unit (a-2) having the hydrophilic group; and the repeating unit (a-3) having the partial structure expressed by the General Formula (2), and may further include a repeating unit (a-4) having a hydrophobic group which is a low-polarity component, if necessary.

Accordingly, adjustment of the SP value described later is more easily performed.

Examples of the repeating unit (a-4) having a hydrophobic group include a repeating unit derived from a vinyl monomer so that a homopolymer is water-insoluble. Among these, a repeating unit which has a structure of an alkyl ester or an aralkyl ester such as (meth)acrylic acid, and has a partial structure different from the partial structure expressed by the General Formula (2-1) or the General formula (2-2) may be used.

Among these, from the viewpoint of adjusting the polarity of (a) the specific copolymer, the total number of carbon atoms of the repeating unit (a-4) having a hydrophobic group is preferably 5 to 22, is more preferably 8 to 22, and is even more preferably 8 to 14.

That is, in a case of an alkyl ester such as (meth)acrylic acid, an ester having an alkyl group with 1 to 19 carbon atoms and an ester having an alkyl group with 1 to 12 carbon atoms are preferable. In a case of an alkyl ester such as methacrylic acid, an ester having an alkyl group with 1 to 18 carbon atoms and an ester having an alkyl group with 1 to 8 carbon atoms are preferable.

The alkyl group may have a straight chain or be branched, or may be cyclic.

The repeating unit (a-4) having a hydrophobic group, which may be included in (a) the specific copolymer according to the present invention, is exemplified as follows, but the (a-4) of the present invention is not limited thereto.

Specific examples of the repeating unit (a-4) having a hydrophobic group include (meth)acrylic acid esters such as methyl (meth)acrylate, ethyl (meth)acrylate, n-propyl (meth)acrylate, n-butyl (meth)acrylate, n-hexyl (meth)acrylate, 2-ethylhexyl (meth)acrylate, octyl (meth)acrylate, decyl (meth)acrylate, dodecyl (meth)acrylate, stearyl (meth)acrylate, and cyclohexyl methacrylate, 2-bornyl methacrylate, tetrahydrofurfuryl (meth)acrylate, and acetoacetoxyethyl (meth)acrylate, and vinyl ethers such as chloroethyl vinyl ether. Among these, (meth)acrylic acid esters substituted by an alkyl group having 5 to 22 carbon atoms in total, such as n-propyl methacrylate, n-butyl (meth)acrylate, n-hexyl (meth)acrylate, 2-ethylhexyl (meth)acrylate, octyl (meth)acrylate, decyl (meth)acrylate, dodecyl (meth)acrylate, stearyl (meth)acrylate, and cyclohexyl methacrylate are preferable, and n-propyl methacrylate, isopropyl methacrylate, n-butyl (meth)acrylate, n-hexyl (meth)acrylate, 2-ethylhexyl (meth)acrylate, octyl (meth)acrylate, and the like are more preferable. In addition, n-butyl methacrylate and 2-ethylhexyl methacrylate, are particularly preferable.

(a) The specific copolymer may include only one type of repeating unit (a-4) having a hydrophobic group, or may include two or more types thereof.

From the viewpoint of reducing the polarity of the copolymer, the range of the repeating unit (a-4) having a hydrophobic group is preferably 0% to 72% by mass, is more preferably 0% to 45% by mass, and is most preferably 0% to 35% by mass with respect to the total mass of (a) the specific copolymer.

As (a) the specific copolymer used in the present invention, at least one type of repeating unit is selected from the group consisting of repeating units which are the repeating unit (a-1) having the partial structure expressed by the General Formula (1), the repeating unit (a-2) having a hydrophilic group, and the repeating unit (a-3) having a hydrophobic group so that the SP value thereof is in the above-mentioned range.

Regarding a preferable ratio of the repeating unit (a-1) having the partial structure expressed by the General Formula (1), the repeating unit (a-2) having a hydrophilic group, and the repeating unit (a-3) having a hydrophobic group in (a) the specific copolymer, based on mass, as the (a-1) : the (a-2) : the (a-3), a range of 20% to 75% by mass : 8% to 25% by mass : 5% to 70% by mass is preferable, a range of 25% to 70% by mass : 10% to 23% by mass : 7% to 65% by mass is more preferable, and a range of 30% to 65% by mass : 10% to 20% by mass : 15% to 60% by mass is most preferable. Here, the ratio is selected so that the sum of the (a-1), the (a-2), and the (a-3) is 100% by mass.

In a case where (a) the specific copolymer used in the present invention includes the repeating unit (a-4) having a hydrophobic group, at least one type of repeating unit is selected from the group consisting of repeating units which are the repeating unit (a-1) having the partial structure expressed by the General Formula (1), the repeating unit (a-2) having a hydrophilic group, the repeating unit (a-3) having a hydrophobic group, and the repeating unit (a-4) having a hydrophobic group so that the SP value thereof is in the above-mentioned range.

Regarding a preferable ratio of the (a-1), the (a-2), the (a-3), and the (a-4) in (a) the specific copolymer, based on mass, as (a-1) : (a-2) : (a-3) : (a-4), a range of 20% to 75% by mass : 8% to 25% by mass : 5% to 70% by mass : 1% to 67% by mass is preferable, a range of 25% to 70% by mass : 10% to 23% by mass : 7% to 63% by mass : 2% to 58% by mass is more preferable, and a range of 30% to 65% by mass : 10% to 20% by mass : 8% to 55% by mass : 5% to 52% by mass is most preferable. Here, the ratio is selected so that the sum of the (a-1), the (a-2), the (a-3), and the (a-4) is 100% by mass.

### (SP Value of (a) Specific Copolymer)

The SP value of (a) the specific copolymer according to the present invention is 20.7 MPa^{1/2} to 23.0 MPa^{1/2}. From the viewpoint of exhibiting solvent resistance and water resistance at high levels, the SP value thereof is more preferably 21.2 MPa^{1/2} to 22.8 MPa^{1/2}, and is particularly preferably 21.5 MPa^{1/2} to 22.5 MPa^{1/2}.

Hereinafter, SP values in monomer units representatively used in the present invention are described. Numerical values described in brackets after monomers' names are SP values, and the unit thereof is MPa^{1/2}.

The following monomer 1 (24.41), the following monomer 2 (23.22), the following monomer 3 (22.75), methacrylic acid (24.02), 2-hydroxyethyl methacrylate (22.89), 2-hydroxyethyl acrylamide (32.87), methyl methacrylate (19.5), n-butyl methacrylate (18.33), isobutyl methacrylate (17.76), tert-butyl methacrylate (17.97), 2-ethylhexyl methacrylate (17.30), stearyl methacrylate (17.08), 2-hydroxyethyl methacrylate (22.89), tetrahydrofurfuryl methacrylate (21.29), cyclohexyl methacrylate (18.79), benzyl methacrylate (20.21), 2-phenoxy ethyl methacrylate (20.23), isobornyl methacrylate (18.09), nonylphenylethyl acrylate (19.00), phenoxytetraethylene glycol acrylate (20.47), and 2-hydroxy-3-phenoxypropyl acrylate (21.80) may be used.

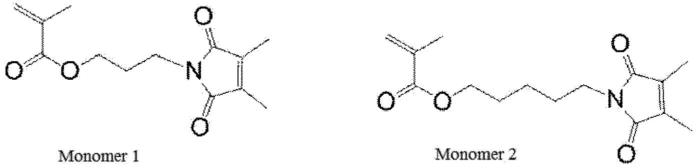

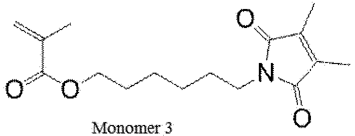

Since the ink composition of the present invention contains (a) the specific copolymer that has an SP value in a specific range, an ink image in which both the water resistance and the solvent resistance are excellent can be formed.

In a case where a non-crosslinkable polymer that does not have the repeating unit (a-1) having the partial structure expressed by the General Formula (1) is used for (a) the specific copolymer, it is difficult to achieve both water resistance and solvent resistance through polarity adjustment. However, since the ink composition of the present invention includes the repeating unit (a-1) having the partial structure expressed by the General Formula (1) in (a) the specific copolymer, both a cross-linking effect and an insolubilizing effect due to polarity can be exhibited. Therefore, both effects of water resistance and solvent resistance can be achieved. Moreover, by controlling the polarity (SP value) of (a) the specific copolymer to be in a specific range, an image composition having excellent adhesion to a recording medium can be obtained.

The weight average molecular weight of (a) the specific copolymer included in the ink composition of the present invention is preferably in a range of 5000 to 150,000 from the viewpoint of water resistance, and is more preferably in a range of 5000 to 100,000 from the viewpoint of enhancing discharge properties, and is even more preferably in a range of 10,000 to 90,000.

The weight average molecular weight is measured by Gel Permeation Chromatography (GPC). In GPC, the weight average molecular weight was measured using an HLC-8020GPC (manufactured by TOSOH CORPORATION), using TSKgel SuperHZM-H, TSKgel SuperHZ4000, and TSKgel SuperHZ200 (manufactured by TOSOH CORPORATION, 4.6 mm ID × 15 cm) as columns, tetrahydrofuran (THF) as an eluent, and by setting the temperature of a column oven to 40°C. For calculating the molecular weight, polystyrene standards were used.

Hereinafter, specific examples of (a) the specific copolymer usable in the present invention are described by showing raw material monomers that constitute the repeating units included in (a) the specific copolymer, the contents thereof based on mass, and the weight average molecular weights of (a) the specific copolymer, but the present invention is not limited thereto. In addition, "SP value" shown in the following Tables 1 to 3 represents SP values of (a) the specific copolymer and shows values respectively obtained by measuring methods or calculating methods described previously.

**[Table 1]**

| | (a-1) | | (a-2) | | | | | | (a-3) | | | | | |
|---|---|---|---|---|---|---|---|---|---|---|---|---|---|---|
| | Name | (%) | Name | (%) | Name | (%) | Name | (%) | Name | (%) | Name | (%) | Mw | SP value (MPa^{1/2}) |
| A-1 | Monomer 1 | 50 | MAA | 9 | MAA-Na | 7 | | | BMA | 34 | | | 72300 | 22.3 |
| A-2 | Monomer 1 | 40 | MAA | 6 | MAA-Na | 6 | | | iBMA | 48 | | | 83500 | 21.2 |
| A-3 | Monomer 1 | 50 | MAA | 9 | MAA-Na | 7 | | | BMA | 24 | tBMA | 10 | 79400 | 22.2 |
| A-4 | Monomer 1 | 60 | MAA | 9 | MAA-Na | 7 | | | BMA | 24 | | | 61500 | 22.9 |
| A-5 | Monomer 1 | 40 | MAA | 9 | MAA-Na | 7 | | | tBMA | 44 | | | 45700 | 21.5 |
| A-6 | Monomer 1 | 60 | MAA | 9 | MAA-Na | 7 | | | BMA | 24 | | | 37600 | 22.2 |
| A-7 | Monomer 1 | 40 | MAA | 6 | MAA-Na | 6 | HEMA | 8 | tBMA | 40 | | | 96000 | 21.7 |
| A-8 | Monomer 1 | 40 | MAA | 6 | MAA-Na | 6 | HEAA | 8 | tBMA | 40 | | | 43000 | 22.5 |
| A-9 | Monomer 1 | 30 | MAA | 7 | MAA-Na | 7 | | | tBMA | 56 | | | 83000 | 20.8 |
| A-10 | Monomer 1 | 40 | MAA | 9 | MAA-Na | 7 | | | CyHMA | 44 | | | 70100 | 21.9 |
| A-11 | Monomer 1 | 40 | MAA | 9 | MAA-Na | 7 | | | BMA | 20 | PEMA | 24 | 72300 | 22.1 |
| A-12 | Monomer 1 | 60 | MAA | 9 | MAA-Na | 7 | | | tBMA | 24 | C18MA | 10 | 62000 | 22.1 |
| A-13 | Monomer 1 | 20 | MAA | 9 | MAA-Na | 7 | | | tBMA | 40 | PEMA | 24 | 83000 | 20.8 |
| A-14 | Monomer 1 | 70 | MAA | 6 | MAA-Na | 6 | | | tBMA | 18 | | | 73000 | 22.9 |
| A-15 | Monomer 1 | 40 | MAA | 9 | MAA-Na | 7 | | | IBOMA | 44 | | | 51900 | 21.6 |
| A-16 | Monomer 3 | 40 | MAA | 9 | MAA-Na | 7 | | | BMA | 44 | | | 46000 | 21.0 |
| A-17 | Monomer 1 | 50 | MAA | 9 | MAA-Na | 7 | | | BMA | 24 | tBMA | 10 | 53000 | 22.4 |
| A-18 | Monomer 1 | 50 | MAA | 9 | MAA-Na | 7 | | | BMA | 24 | BnMA | 10 | 71300 | 22.5 |
| A-19 | Monomer 1 | 38 | MAA | 2 | MAA-Na | 10 | | | tBMA | 50 | | | 38000 | 21.1 |
| A-20 | Monomer 1 | 50 | MAA | 6 | MAA-Na | 6 | | | tBMA | 38 | | | 11500 | 21.9 |
| A-21 | Monomer 1 | 50 | MAA | 9 | MAA-Na | 7 | | | EHMA | 14 | tBMA | 20 | 69800 | 22.1 |
| A-22 | Monomer 1 | 60 | MAA | 9 | MAA-Na | 7 | | | EHMA | 24 | | | 83800 | 22.6 |
| A-23 | Monomer 1 | 60 | MAA | 4 | MAA-Na | 8 | | | BMA | 28 | | | 61500 | 22.7 |
| A-24 | Monomer 2 | 40 | MAA | 9 | MAA-Na | 7 | | | BMA | 44 | | | 46500 | 21.2 |

**[Table 2]**

| | (a-1) | | (a-2) | | | | | | (a-3) | | (a-4) | | | |
|---|---|---|---|---|---|---|---|---|---|---|---|---|---|---|
| | Name | (%) | Name | (%) | Name | (%) | Name | (%) | Name | (%) | Name | (%) | Mw | SP value (MPa1/2) |
| A-25 | Monomer 1 | 40 | MAA | 10 | MAA-Na | 10 | | | IBOMA | 40 | | | 45000 | 22.3 |
| A-26 | Monomer 1 | 50 | MAA | 9 | MAA-Na | 7 | | | tBMA | 10 | BMA | 24 | 83500 | 22.2 |
| A-27 | Monomer 2 | 50 | MAA | 9 | MAA-Na | 7 | | | tBMA | 34 | | | 73700 | 21.3 |
| A-28 | Monomer 1 | 40 | MAA | 6 | MAA-Na | 6 | HEAA | 8 | tBMA | 40 | | | 43000 | 22.5 |
| A-29 | Monomer 1 | 60 | MAA | 9 | MAA-Na | 7 | | | tBMA | 24 | C18MA | 10 | 62000 | 22.1 |
| A-30 | Monomer 1 | 20 | MAA | 9 | MAA-Na | 7 | | | tBMA | 40 | PEMA | 24 | 83000 | 20.8 |
| A-31 | Monomer 1 | 70 | MAA | 6 | MAA-Na | 6 | | | tBMA | 18 | | | 73000 | 22.9 |
| A-32 | Monomer 1 | 40 | MAA | 9 | MAA-Na | 7 | | | IBOMA | 44 | | | 51900 | 21.6 |
| A-33 | Monomer 1 | 50 | MAA | 9 | MAA-Na | 7 | | | tBMA | 10 | BMA | 24 | 53000 | 22.4 |
| A-34 | Monomer 1 | 38 | MAA | 2 | MAA-Na | 10 | | | tBMA | 50 | | | 38000 | 21.1 |
| A-35 | Monomer 1 | 50 | MAA | 6 | MAA-Na | 6 | | | tBMA | 38 | | | 11500 | 21.9 |
| A-36 | Monomer 1 | 50 | MAA | 9 | MAA-Na | 7 | | | tBMA | 20 | EHMA | 14 | 69800 | 22.1 |
| A-3 7 | Monomer 1 | 30 | MAA | 9 | MAA-Na | 7 | | | tBMA | 54 | | | 7200 | 20.9 |

**[Table 3]**

| | (a-1) | | (a-2) | | | | | | (a-3) | | (a-4) | | Mw | SP value (MPa^{1/2}) |
|---|---|---|---|---|---|---|---|---|---|---|---|---|---|---|
| | Name | (%) | Name | (%) | Name | (%) | Name | (%) | Name | (%) | Name | (%) | | |
| A-38 | Monomer 1 | 40 | MAA | 9 | MAA-Na | 7 | | | BnMA | 44 | | | 69000 | 22.0 |
| A-3 9 | Monomer 1 | 40 | MAA | 8 | MAA-Na | 8 | | | NPE | 44 | | | 46000 | 22.0 |
| A-40 | Monomer 1 | 40 | MAA | 9 | MAA-Na | 7 | | | PEMA | 44 | | | 63000 | 22.5 |
| A-41 | Monomer 1 | 40 | MAA | 9 | MAA-Na | 7 | | | PEMA | 24 | BMA | 20 | 72300 | 22.1 |
| A-42 | Monomer 1 | 40 | MAA | 9 | MAA-Na | 7 | | | PEMA | 24 | tBMA | 20 | 67400 | 22.0 |
| A-43 | Monomer 1 | 40 | MAA | 6 | MAA-Na | 6 | HEAA | 8 | PEMA | 20 | BMA | 20 | 56000 | 22.9 |
| A-44 | Monomer 1 | 40 | MAA | 6 | MAA-Na | 6 | HEMA | 8 | PEMA | 20 | BMA | 20 | 38000 | 21.7 |
| A-45 | Monomer 1 | 40 | MAA | 9 | MAA-Na | 7 | | | P(EO)4A | 44 | | | 76000 | 22.6 |
| A-46 | Monomer 1 | 30 | MAA | 6 | MAA-Na | 6 | | | PEMA | 10 | tBMA | 48 | 4300 | 20.9 |
| A-47 | Monomer 2 | 60 | MAA | 9 | MAA-Na | 7 | | | PEMA | 10 | BMA | 24 | 70000 | 22.4 |
| A-48 | Monomer 1 | 60 | MAA | 9 | MAA-Na | 7 | | | PHPA | 44 | | | 84000 | 22.6 |

In addition, abbreviated names in Tables 1 to 3 are as follows.
MAA: methacrylic acid (manufactured by Wako Pure Chemical Industries, Ltd.)
MAA-Na: methacrylic acid sodium salt (generated by neutralizing a polymer made by copolymerizing methacrylic acid)
BMA: n-butyl methacrylate (manufactured by Wako Pure Chemical Industries, Ltd.)
iBMA: isobutyl methacrylate (manufactured by Wako Pure Chemical Industries, Ltd.)
tBMA: tert-butyl methacrylate (manufactured by Wako Pure Chemical Industries, Ltd.)
IBOMA: isobornyl methacrylate (manufactured by Wako Pure Chemical Industries, Ltd.)
C18MA: octadecyl methacrylate (manufactured by Wako Pure Chemical Industries, Ltd.)
CyHMA: cyclohexyl methacrylate (manufactured by Wako Pure Chemical Industries, Ltd.)
PEMA: phenoxy ethyl methacrylate (NK Ester PHE-1G, manufactured by Shin Nakamura Chemical Co., Ltd.)
EHMA: 2-ethylhexyl methacrylate (manufactured by Wako Pure Chemical Industries, Ltd.)
BnMA: benzyl methacrylate (manufactured by Wako Pure Chemical Industries, Ltd.)
HEAA: 2-hydroxyethyl acrylamide (manufactured by Tokyo Chemical Industry Co., Ltd.)
HEMA: 2-hydroxyethyl methacrylate (manufactured by Sigma-Aldrich Co., LLC, Japan)
NPE: nonylphenylethyl acrylate (NK Ester NPA-10G, manufactured by Shin Nakamura Chemical Co., Ltd.)
P(EO)4MA: phenoxytetraethylene glycol acrylate (New Frontier PHE-4, manufactured by DAI-ICHI KOGYO SEIYAKU CO., LTD.)
PHPA: 2-hydroxy-3-phenoxypropyl acrylate (EPOXY ESTER M-600A, manufactured by Kyoeisha Chemical Co., Ltd.)
MMA: methyl methacrylate (manufactured by Wako Pure Chemical Industries, Ltd.)

(a) The specific copolymer according to the present invention can be obtained by, for example, polymerizing a monomer for forming the repeating unit (a-1) having the partial structure expressed by the General Formula (1), a monomer for forming the repeating unit (a-2) having a hydrophilic group, and a monomer for forming the repeating unit (a-3) having a hydrophobic group using a well-known neutralization method, and neutralizing acidic groups using hydroxides such as those of alkali metals if necessary. Specifically, for example, (a) the specific copolymer can be manufactured by methods based on the neutralization methods described in JP1977-988A (JP-S52-988A), JP1980-154970A (JP-S55-154970A), Langmuir Vol. 18, No. 14, p. 5414 to 5421 (2002), and the like.

### [(b) Water]

The ink composition of the present invention contains water.

As (b) water, ion-exchange water, distilled water, and the like, which do not contain impurities, are preferably used.

The content of water in the ink composition of the present invention is preferably 10% to 97% by mass, is preferably 30% to 95% by mass, and is more preferably 50% to 85% by mass.

### (c) Water-Soluble Organic Solvent

The ink composition of the present invention contains water as a main solvent and further contains a water-soluble organic solvent.

Herein, the water-soluble organic solvent refers to an organic solvent of which solubility in water at 25°C is 10% by mass or higher.

Examples of the water-soluble organic solvent usable in the present invention include the following:
Alcohols (for example, methanol, ethanol, propanol, isopropanol, butanol, isobutanol, secondary butanol, tertiary butanol, pentanol, hexanol, cyclohexanol, and benzyl alcohol),
Polyols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, and 2-methylpropanediol),
Polyol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl ether, ethylene glycol monophenyl ether, and propylene glycol monophenyl ether),
Amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethylenimine, pentamethyldiethylenetriamine, and tetramethylpropylenediamine),
Amides (for example, formamide, N,N-dimethylformamide, N,N-dimethylacetamide, methoxypropionamide, N-methylmethoxypropionamide, N,N-dimethylmethoxypropionamide, n-butoxypropionamide, N-methyl-n-butoxypropionamide, and N,N-dimethyl-n-butoxypropionamide), heterocycles (for example, 2-pyrrolidone, N-methyl-2-pyrrolidone, cyclohexylpyrrolidone, 2-oxazolidone, 1,3-dimethyl-2-imidazolidinone, γ-butyrolactone, propylene carbonate, ethylene carbonate, and ethylene urea),
Sulfoxides (for example, dimethylsulfoxide),
Sulfones (for example, sulfolane), and
Others (urea, acetonitrile, acetone, and the like)

Examples of the preferable water-soluble organic solvent include polyol ethers, amides, and heterocycles, and these are preferably used in combination.

Among polyol ethers, so-called glycol ethers are preferable, and specifically, tripropylene glycol monomethyl ether, dipropylene glycol monomethyl ether, and dipropylene glycol dimethyl ether are preferable, and 2-dipropylene glycol monomethyl ether is more preferable.

Among heterocycles, 2-pyrrolidone, γ-butyrolactone, propylene carbonate, ethylene urea, and the like are preferable, and 2-pyrrolidone and γ-butyrolactone are particularly preferable.

A solvent having a particularly high boiling point can be preferably used. A solvent having a boiling point of 120°C or higher at atmospheric pressure is preferable, and a solvent having a boiling point of 150°C or higher is more preferable.

The water-soluble organic solvents may be used singly or in combination. The amount of the water-soluble organic solvent added to the ink composition is preferably 1% to 60% by mass in total, and is more preferably 2% to 35% by mass.

### [Other Additives]

The ink composition of the present invention can also use a well-known additive in addition to (a) the specific copolymer, (b) water, and (c) the water-soluble organic solvent, which are essential components, as long as the effects of the present invention are not damaged. Hereinafter, the additives usable for the ink composition will be described.

### (d) Colorant

The ink composition of the present invention may contain a colorant, and becomes a colored ink composition by containing the colorant.

Examples of the colorant include dyes and pigments, and from the viewpoint of durability such as heat resistance, light resistance, and water resistance, pigments are preferable.

In a case where a pigment is used as the colorant, the pigment can be contained in the ink composition as a pigment dispersion. It is preferable to use the pigment dispersion as the colorant from the viewpoint of enhancing solvent resistance. As the pigment dispersion, as well as those made by dispersing a pigment using a pigment dispersant, a self-dispersing pigment can also be used.

### (Pigment)

As the pigment used as the colorant, organic pigments, inorganic pigments, and the like, which are generally used, can be used. Typically, all commercially available pigments can be used, and moreover, pigments which are treated in advance by commercially available pigment dispersions, surface treatment agents, or the like, for example, a pigment dispersed in an insoluble resin as a dispersion medium, or a pigment having a resin grafted onto the surface thereof can be used as long as the effects of the present invention are not damaged.

Examples of these pigments include those disclosed in Seishiro Ito, "Ganryo no Jiten (Dictionary of Pigments)" (2000), W. Herbst, K. Hunger, "Industrial Organic Pigments", JP2002-12607A, JP2002-188025A, JP2003-26978A, and JP2003-342503A.

Examples of the organic pigments and inorganic pigments usable in the present invention, which exhibit yellow color, include monoazo pigments such as C. I. Pigment Yellow 1 (Fast Yellow G or the like) and C. I. Pigment Yellow 74, disazo pigments such as C. I. Pigment Yellow 12 (Disazo Yellow or the like), C. I. Pigment Yellow 17, C. I. Pigment Yellow 97, C. I. Pigment Yellow 3, C. I. Pigment Yellow 16, C. I. Pigment Yellow 83, C. I. Pigment Yellow 155, and C. I. Pigment Yellow 219, azo lake pigments such as C. I. Pigment Yellow 100 (Tartrazine Yellow Lake or the like), condensed azo pigments such as C. I. Pigment Yellow 95 (Condensed Azo Yellow or the like), C. I. Pigment Yellow 93, C. I. Pigment Yellow 94, C. I. Pigment Yellow 128, and C. I. Pigment Yellow 166, acidic dye lake pigments such as C. I. Pigment Yellow 115 (Quinoline Yellow Lake or the like), basic dye lake pigments such as C. I. Pigment Yellow 18 (Thioflavin Lake or the like), anthraquinone-based pigments such as C. I. Pigment Yellow 24 (Flavanthrone Yellow), isoindolinone pigments such as Isoindolinone Yellow 3RLT (Y-110), quinophthalone pigments such as C. I. Pigment Yellow 138 (Quinophthalone Yellow), isoindoline pigments such as C. I. Pigment Yellow 139 (Isoindoline Yellow), nitroso pigments such as C. I. Pigment Yellow 153 (Nickel Nitroso Yellow or the like), metal complex salt-based azomethine pigments such as C. I. Pigment Yellow 117 (copper azomethine yellow or the like), acetolone pigments such as C. I. Pigment Yellow 120 (benzimidazolone yellow), C. I. Pigment Yellow 151, C. I. Pigment Yellow 154, C. I. Pigment Yellow 175, C. I. Pigment Yellow 180, C I. Pigment Yellow 181, and C. I. Pigment Yellow 194, and nickel azo pigments such as C. I. Pigment Yellow 150. Among these, C. I. Pigment Yellow 74, C. I. Pigment Yellow 120, C. I. Pigment Yellow 150, C. I. Pigment Yellow 151, C. I. Pigment Yellow 154, C. I. Pigment Yellow 155, C. I. Pigment Yellow 180, and the like are preferably used.

Examples of pigments which exhibit red or magenta color include monoazo-based pigments such as C. I. Pigment Red 3 (Toluidine Red or the like), B-naphthol pigments such as C. I. Pigment Red 1, C. I. Pigment Red 4, and C. I. Pigment Red 6, disazo pigments such as C. I. Pigment Red 38 (pyrazolone red B or the like), azo lake pigments such as C. I. Pigment Red 53:1 (Lake Red C or the like) or C. I. Pigment Red 57:1 (Brilliant Carmine 6B or the like), C. I. Pigment Red 52:1, and C. I. Pigment Red 48 (B-oxynaphthoic acid lake or the like), condensed azo pigments such as C. I. Pigment Red 144 (Condensed Azo Red or the like), C. I. Pigment Red 166, C. I. Pigment Red 220, C. I. Pigment Red 214, C. I. Pigment Red 221, and C. I. Pigment Red 242, acidic dye lake pigments such as C. I. Pigment Red 174 (Phloxine B Lake or the like) and C. I. Pigment Red 172 (Erythrosine Lake or the like), basic dye lake pigments such as C. I. Pigment Red 81 (Rhodamine 6G' Lake or the like), anthraquinone-based pigments such as C. I. Pigment Red 177 (Dianthraquinonyl Red or the like), thioindigo pigments such as C. I. Pigment Red 88 (Thioindigo Bordeaux or the like), and perinone pigments such as C. I. Pigment Red 194 (Perinone Red or the like).

Perylene pigments such as C. I. Pigment Red 149 (Perylene Scarlet or the like), C. I. Pigment Red 179, C. I. Pigment Red 178, C. I. Pigment Red 190, C. I. Pigment Red 224, C. I. Pigment Red 123, and C. I. Pigment Red 224, quinacridone pigments such as C. I. Pigment Violet 19 (unsubstituted quinacridone), C. I. Pigment Red 122 (Quinacridone Magenta or the like), C. I. Pigment Red 262, C. I. Pigment Red 207, and C. I. Pigment Red 209, quinacridone pigments which are solid solutions of the plurality of quinacridone pigments, isoindolinone pigments such as C. I. Pigment Red 180 (Isoindolinone Red 2BLT or the like), alizarin lake pigments such as C. I. Pigment Red 83 (Madder Lake or the like), naphtholone pigments such as C. I. Pigment Red 171, C. I. Pigment Red 175, C. I. Pigment Red 176, C. I. Pigment Red 185, and C. I. Pigment Red 208, naphthol AS-based lake pigments such as C. I. Pigment Red 247, naphthol AS pigments such as C. I. Pigment Red 2, C. I. Pigment Red 5, C. I. Pigment Red 21, C. I. Pigment Red 170, C. I. Pigment Red 187, C. I. Pigment Red 256, C. I. Pigment Red 268, and C. I. Pigment Red 269, diketopyrrolopyrrole pigments such as C. I. Pigment Red 254, C. I. Pigment Red 255, C. I. Pigment Red 264, and C. I. Pigment Red 27, and the like can be used. Among these, quinacridone pigments such as C. I. Pigment Violet 19 (unsubstituted quinacridone), C. I. Pigment Red 122 (Quinacridone Magenta or the like), C. I. Pigment Red 262, C. I. Pigment Red 207, and C. I. Pigment Red 209, quinacridone pigments which are solid solutions including a plurality of quinacridone pigments, and the like are preferable.

Examples of pigments which exhibit blue or cyan color include disazo-based pigments such as C. I. Pigment Blue 25 (Dianisidine Blue or the like), phthalocyanine pigments such as C. I. Pigment Blue 15, C. I. Pigment Blue 15:1, C. I. Pigment Blue 15:2, C. I. Pigment Blue 15:3, C. I. Pigment Blue 15:4, C. I. Pigment Blue 15:6, or C. I. Pigment Blue 16 (Phthalocyanine Blue or the like), acidic dye lake pigments such as C. I. Pigment Blue 24 (Peacock Blue Lake or the like), basic dye lake pigments such as C. I. Pigment Blue 1 (Victoria Pure Blue BO Lake or the like), anthraquinone-based pigments such as C. I. Pigment Blue 60 (Indanthrone Blue or the like), and alkali blue pigments such as C. I. Pigment Blue 18 (Alkali Blue V-5:1). Among these, copper phthalocyanine pigments such as C. I. Pigment Blue 15, C. I. Pigment Blue 15:1, C. I. Pigment Blue 15:2, C. I. Pigment Blue 15:3, C. I. Pigment Blue 15:4, and C. I. Pigment Blue 15:6 are preferable.

Examples of pigments which exhibit green color include phthalocyanine pigments such as C. I. Pigment Green 7 (Phthalocyanine Green) and C. I. Pigment Green 36 (Phthalocyanine Green), and azo metal complex pigments such as C. I. Pigment Green 8 (Nitroso Green) and C. I. Pigment Green 10.

Examples of pigments which exhibit green color include isoindoline-based pigments such as C. I. Pigment Orange 66 (Isoindoline Orange), anthraquinone-based pigments such as C. I. Pigment Orange 51 (Dichloropyranthrone Orange), B-naphthol pigments such as C. I. Pigment Orange 2, C. I. Pigment Orange 3, and C. I. Pigment Orange 5, naphthol AS pigments such as C. I. Pigment Orange 4, C. I. Pigment Orange 22, C. I. Pigment Orange 24, C. I. Pigment Orange 38, or C. I. Pigment Orange 74, isoindolinone pigments such as C. I. Pigment Orange 61, perinone pigments such as C. I. Pigment Orange 43, disazo pigments such as C. I. Pigment Orange 15 and C. I. Pigment Orange 16, quinacridone pigments such C. I. Pigment Orange 48 and C. I. Pigment Orange 49, acetolone pigments such as C. I. Pigment Orange 36, C. I. Pigment Orange 62, C. I. Pigment Orange 60, C. I. Pigment Orange 64, and C. I. Pigment Orange 72, and pyrazolone pigments such as C. I. Pigment Orange 13 and C. I. Pigment Orange 34.

Examples of pigments which exhibit brown color include naphthrone pigments such as C. I. Pigment Brown 25 and C. I. Pigment Brown 32.

Examples of pigments which exhibit black color include indazine pigments such as C. I. Pigment Black 7 (Carbon Black), titanium black, and C. I. Pigment Black 1 (Aniline Black), perylene pigments such as C. I. Pigment Black 31 and C. I. Pigment Black 32. Among these, C. I. Pigment Black 7 is preferable.

Examples of white pigments include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white). Among these, titanium oxide (TiO₂, so-called titanium white) is preferable. Inorganic particles used in the white pigments may be a single substance or composite particles with, for example, an oxide of silicon, aluminum, zirconium, titanium, or the like, an organic metal compound, or an organic compound.

Here, since titanium oxide has a low specific gravity compared to other white pigments, has a large refractive index, and is chemically and physically stable, masking abilities or tinting strength is high as a pigment, and durability against acids, alkalis, and other environments is also excellent. Therefore, titanium oxide is preferably used as the white pigment. Naturally, other white pigments (including pigments besides the white pigments listed above) may be used as necessary.

Pigments other than the white pigments have better color developing properties as the average particle diameters are reduced. Therefore, in a case where the pigment dispersion is applied as a pigment dispersion other than the white pigments, the average particle diameter of the pigment contained in the pigment dispersion is preferably approximately 0.01 µm to 0.4 µm, and is more preferably in a range of 0.02 µm to 0.3 µm.

In addition, the maximum particle diameter of the pigment is 3 µm or less, and is preferably 1 µm or less. The particle diameter of the pigment can be adjusted depending on pigments, dispersants, selection of a dispersion medium, dispersing conditions, selection of filtering conditions, and the like. In a case where the ink composition of the present invention is prepared as a white ink composition, the average particle diameter of the pigment contained in the pigment dispersion is preferably approximately 0.05 µm to 1.0 µm from the viewpoint of providing sufficient masking properties, and is more preferably approximately 0.1 µm to 0.4 µm. Even in a case of a white pigment dispersion, the maximum particle diameter of the pigment is 3 µm or less, and is preferably 1 µm or less.

### (Dispersant)

In a case where a pigment is used as the colorant, a pigment dispersant may be used as necessary when pigment particles are prepared. Examples of usable pigment dispersants include active agents such as higher fatty acid salts, alkyl sulfate salts, alkyl ester sulfate salts, alkylsulfonate salts, sulfosuccinate salts, naphthalenesulfonate salts, alkyl phosphate salts, polyoxyalkylene alkyl ether phosphates, polyoxyalkylene alkylphenyl ethers, polyoxyalkylene polyoxypropylene glycol, glycerin esters, sorbitan esters, polyoxyethylene fatty acid amides, and amine oxide, a block copolymer, a random copolymer, and salts thereof made of two or more types of monomers selected from styrene, a styrene derivative, a vinylnaphthalene derivative, acrylic acid, an acrylic acid derivative, maleic acid, a maleic acid derivative, itaconic acid, an itaconic acid derivative, fumaric acid, and a fumaric acid derivative.

In addition, the self-dispersing pigment can be used in the ink composition of the present invention. The self-dispersing pigment described in the present invention refers to a pigment that can disperse without a dispersant, and is particularly preferably pigment particles having a polar group on the surface thereof.

In the present invention, the pigment particles having a polar group on the surface thereof refer to pigment particles of which the surface is directly modified with a polar group, or an organic substance that has an organic pigment core and is bonded to a polar group directly or via a linkage (hereinafter, called a pigment derivative).

Examples of the polar group include a sulfonic acid group, a carboxylic acid group, a phosphoric acid group, a boric acid group, and a hydroxyl group. Among these, a sulfonic acid group and a carboxylic acid group are preferable, and a sulfonic acid group is more preferable.

As a method of obtaining such pigment particles having a polar group on the surface thereof, the method of oxidizing the surface of pigment particles by using an appropriate oxidant so as to introduce a polar group such as a sulfonic acid group or a salt thereof into at least a portion of the pigment surface, which is described in WO97/48769A, JP1998-110129A (JP-H10-110129A), JP1999-246807A (JP-H11-246807A), JP1999-57458A (JP-H11-57458A), JP1999-189739A (JP-H11-189739A), JP1999-323232A (JP-H11-323232A), JP2000-265094A, and the like, is exemplified. Specifically, the pigment particles can be prepared by oxidizing the carbon black with concentrated nitric acid or, in a case of color pigments, by oxidizing with sulfamic acid, sulfonated pyridine salt, amidosulfuric acid, or the like in sulfolane or N-methyl-2-pyrrolidone. Through these reactions, components which become water-soluble due to the oxidation having proceeded too far are removed and purified, thereby obtaining a pigment dispersion. In addition, when a sulfonic acid group is introduced to the surface by oxidation, the acidic group may be neutralized using a basic compound if necessary.

As another method of obtaining the pigment particles having a polar group on the surface thereof, the method of causing a pigment derivative to be adsorbed onto the surface of pigment particles by treatment such as milling, which is described in JP1999-49974A (JP-H11-49974A), JP2000-273383A, and JP2000-303014A, and the method of dissolving a pigment along with a pigment derivative in a solvent and then crystallizing the resultant in a poor solvent, which is described in JP2000-377068, JP2001-1495, and JP2001-234966, and the like, are exemplified. The pigment particles having a polar group on the surface thereof can be easily obtained by either of these methods.

The polar group in the pigment surface may be in a free state or a salt state, or may have a counter salt. Examples of the counter salt include inorganic salts (lithium, sodium, potassium, magnesium, calcium, aluminum, nickel, and ammonium) and organic salts (triethyl ammonium, diethyl ammonium, pyridinium, triethanol ammonium, and the like). Among these, monovalent counter salts are preferable.

In the present invention, the content of the colorant with respect to the total amount of the ink composition is preferably 0.5% to 10% by mass, and is more preferably 0.5% to 5% by mass.

### (e) Resin Particles

The ink composition of the present invention may contain at least one type of resin particles. By containing resin particles, adhesion to a recording base material of an image can further be enhanced.

Examples of the resin particles include resin particles formed of a resin selected from thermoplastic resins and thermosetting resins. The resins may be further-modified resins.

Examples of the resin used for forming the resin particles include an acrylic resin, an epoxy-based resin, a urethane resin, a polyether-based resin, a polyamide-based resin, an unsaturated polyester-based resin, a phenol-based resin, a silicone-based resin, a fluorine-based resin, a polyvinyl-based resin (vinyl chloride, vinyl acetate, polyvinyl alcohol, or polyvinyl butyral), an alkyd resin, a polyester-based resin (such as a phthalic acid resin), and an amino-based material (such as a melamine resin, a melamine-formaldehyde resin, an amino alkyd co-condensed resin, a urea resin, and a urea resin). In addition, the resin for forming particles may be a copolymer including two or more types of structure units that constitute the resins exemplified above, or may be a mixture of two or more types of the resins. In addition, the resin particles themselves may be not only a mixture of two or more types of the resins but also composite resin particles in which two or more types of resins are laminated in, for example, core-shell forms.

In a case of using the resin particles as the ink composition, only a single type or a combination of two or more types of the resin particles may be used.

Among these, as the resin particles, particles of the acrylic resin, the urethane resin, the polyether-based resin, the polyester-based resin, and the polyolefin-based resin are preferable, and from the viewpoint of forming an image having flexibility, strength, and excellent adhesion to a base material, particles of the urethane resin are particularly preferable.

The reason that the urethane resin is preferable is postulated by the inventors to be as follows. That is, the inventors postulated that the urethane resin is formed of a urethane portion capable of having a strong interaction like a hydrogen bond between polymers and a non-urethane portion having a relatively weak intersection between polymers, and when a film of ink is formed, as a microstructure, a sea-island structure is constructed by the portions having a relatively strong intersection and the portions having a relatively weak interaction, which gather together. Accordingly, the inventors postulated that the ink composition of the present invention using the urethane resin particles can form an image having flexibility. Since the urethane resin has flexibility as such, the ink composition can use resin particles with a high Tg, compared to an ink composition that uses resin particles with a low Tg, which has been known hitherto. As a result, the inventors postulated that the ink composition of the present invention can form an ink image having flexibility, strength, and excellent adhesion to a base material.

Therefore, the urethane resin particles are advantageous in a case particularly of using a low-polarity base material to which it is difficult to obtain adhesion.

The urethane resin used for forming the resin particles in the present invention can be obtained by causing a diol compound to react with a diisocyanate compound, and details of the diol compound and the diisocyanate compound are described in, for example, paragraphs 0031 to 0036 of JP2001-247787A as a reference. Among these, it is preferable to use a polyester-based urethane resin having an ester bond in a main chain structure or a polyether-based urethane resin.

The diisocyanate compound is not particularly limited, and examples thereof include: an aliphatic diisocyanate compound such as hexamethylene diisocyanate and 2,2,4-trimethylhexamethylene diisocyanate; an alicyclic diisocyanate compound such as isophorone diisocyanate, 1,4-cyclohexane diisocyanate, and 4,4'-dicyclohexylmethane diisocyanate; an araliphatic diisocyanate compound such as xylylene diisocyanate, and tetramethylxylylene diisocyanate; and an aromatic diisocyanate compound such as tolylene diisocyanate, and phenylmethane diisocyanate. The diisocyanate compounds may be used singly or in a combination of two or more types thereof.

The diol compound is not particularly limited, and examples thereof include a diol compound obtained by polymerizing alkylene oxides such as ethylene oxide or propylene oxide or a heterocyclic ether such as tetrahydrofuran. The polymerization may be copolymerization. Specific examples of the diol compound include: a polyether diol such as polyethylene glycol, polypropylene glycol, polytetramethylene ether glycol, and polyhexamethylene ether glycol; a polyester diol such as polyethylene adipate, polybutylene adipate, polyneopentyl adipate, poly-3-methylpentyl adipate, polyethylene/butylene adipate, and polyneopentyl/hexyl adipate; a polylactone diol such as a polycaprolactone diol; and a polycarbonate diol. Among these, in terms of the effects of the present invention, the polyether diol and the polyester diol are preferable, and the polyester diol is particularly preferable.

In the present invention, it is preferable that a diol compound having a carboxylic acid group be also used as the diol compound to enhance hydrophilic properties. Examples of the diol compound having a carboxylic acid group include dimethylolacetic acid, dimethylolpropionic acid, and dimethylolbutanoic acid, and dimethylolpropionic acid is particularly preferable.

The form of the urethane resin used for the resin particles in the present invention is not particularly limited. A representative form thereof is an emulsion type such as a self-emulsifying emulsion or self-stabilizing type. Particularly, among the above compounds that constitute the urethane resin, a urethane resin made by using a diol compound having an acidic group such as a carboxylic acid group or a sulfonic acid group, a urethane resin obtained by adding a polyhydroxy compound with a low molecular weight as a raw material, or a urethane resin into which an acidic group is introduced may be used, and among these, the urethane resin having a carboxyl group is preferable.

The weight average molecular weight of the urethane resin used in the present invention is preferably 5000 to 200,000 from the viewpoint of scratch resistance and ink preservation stability, and is more preferably 8000 to 30,000. The acid value of the urethane resin is not particularly limited, is preferably 5 mgKOH/g or higher and 100 mgKOH/g or less, and is particularly preferably 10 mgKOH/g or higher and 80 mgKOH/g or less.

In addition, the weight average molecular weight is measured by Gel Permeation Chromatography (GPC). In GPC, an HLC-8220GPC (manufactured by TOSOH CORPORATION) is used, using TSKgel SuperHZM-H, TSKgel SuperHZ4000, and TSKgel SuperHZ2000 (manufactured by TOSOH CORPORATION, 4.6 mm ID×15 cm) as columns. Details of this GPC are described in paragraph 0076 of JP2010-155359A.

As the urethane resin, those synthesized by well-known synthesis methods or commercially available products can be used.

Commercially available products are not particularly limited as long as they are urethane resins, and among these, it is preferable to use a polyester-based urethane resin or a polyether-based urethane resin. Examples thereof include NeoRez R-960 (manufactured by The Lubrizol Corporation, Japan), NeoRez R-989 (manufactured by The Lubrizol Corporation, Japan), NeoRez-9320 (manufactured by The Lubrizol Corporation, Japan), NeoRad NR-440 (manufactured by The Lubrizol Corporation, Japan), Hydran AP-30 (manufactured by Dainippon Ink and Chemicals, Incorporated), Hydran APX-601 (manufactured by Dainippon Ink and Chemicals, Incorporated), Hydran SP-510 (manufactured by Dainippon Ink and Chemicals, Incorporated), Hydran SP-97 (manufactured by Dainippon Ink and Chemicals, Incorporated), Hydran HW140 (manufactured by Dainippon Ink and Chemicals, Incorporated), Takelac W-5025 (manufactured by Mitsui Chemicals, Inc.), Elastron MF-60 (manufactured by Daiichi Kogyo Seiyaku Co., Ltd.), Elastron MF-9 (manufactured by Daiichi Kogyo Seiyaku Co., Ltd.), M-1064 (manufactured by Daiichi Kogyo Seiyaku Co., Ltd.), Izelax S-1020 (manufactured by Hodogaya Chemical Co., Ltd.), Izelax S-1040 (manufactured by Hodogaya Chemical Co., Ltd.), Izelax S-1085C (manufactured by Hodogaya Chemical Co., Ltd.), Izelax S-4040N (manufactured by Hodogaya Chemical Co., Ltd.), Neotan UE-5000 (manufactured by Toagosei Co., Ltd.), RU-40 series (manufactured by Stal Japan), Ucoat UWS-145 (manufactured by Sanyo Chemical Industries, Ltd.), Parmarin UA-150 (manufactured by Sanyo Chemical Industries, Ltd.), WF-41 series (manufactured by Stal Japan), WPC-101 (manufactured by Nippon Polyurethane Industry Co., Ltd.), and Acrylic Resin WBR-016U, WEM-321U, WBR-2018, WBR-2000U, and WBR-601U (manufactured by Taisei Fine Chemical Co., Ltd.). Among these, Acrylic Resin WBR-016U is preferable.

It is preferable that the acrylic resin have an anionic group. For example, the acrylic resin can be obtained by polymerizing an acrylic monomer having an anionic group (an anionic group-containing acrylic monomer) and as necessary, another monomer capable of being polymerized with the anionic group-containing acrylic monomer in a solvent. Examples of the anionic group-containing acrylic monomer include an acrylic monomer having one or more types selected from a carboxyl group, a sulfonic acid group, and a phosphonic group. Among these, an acrylic monomer having a carboxyl group (for example, acrylic acid, methacrylic acid, crotonic acid, ethacrylic acid, propylacrylic acid, isopropylacrylic acid, itaconic acid, and fumaric acid) is preferable, and acrylic acid or methacrylic acid is particularly preferable.

In the present invention, in a case where acrylic resin particles are used as the resin particles, as the acrylic resin particles, self-dispersing polymer particles having self-dispersibility are appropriate from the viewpoint of preservation stability and discharge stability of the ink composition. Hereinafter, self-dispersing polymer particles are described.

The self-dispersing polymer particles refer to water-insoluble polymer particles which can enter a dispersed state in an aqueous medium due to functional groups (particularly, acidic groups or salts thereof) of the polymer itself, when a dispersed state (particularly a dispersed state by a phase inversion emulsification method) is achieved in the absence of a surfactant, and water-insoluble polymer particles that do not particularly need to obtain a free emulsifier.

As the self-dispersing polymer particles, from the viewpoint of discharge stability and preservation stability (particularly, dispersion stability) of the ink composition, self-dispersing polymer particles having a carboxyl group are more preferable.

Here, the dispersed state includes both an emulsified state (emulsion) in which a water-insoluble polymer in the liquid state is dispersed in an aqueous medium and a dispersed state (suspension) in which a water-insoluble polymer in the solid state is dispersed in an aqueous medium.

The water-insoluble polymer in the present invention is preferably a water-insoluble polymer that can take a dispersed state in which the water-insoluble polymer is dispersed in the solid state, from the viewpoint of fixability in the ink composition.

As the method of preparing an aqueous dispersion of the self-dispersing polymer, there is a phase inversion emulsification method. As the phase inversion emulsification method, for example, there is a method of dissolving or dispersing a self-dispersing polymer in a solvent (for example, a hydrophilic organic solvent), then directly pouring the resultant into water without addition of a surfactant, stirring and mixing the resultant in a state in which the salt-forming groups (for example, acidic groups) that the self-dispersing polymer has are neutralized, and removing the solvent, thereby obtaining an aqueous dispersion in the dispersed state.

The dispersed state of the particles of the self-dispersing polymer refers to a state in which even after a solution is obtained by mixing and stirring (apparatus: a stirring apparatus having a stirring blade, revolutions: 200 rpm, for 30 minutes, at 25°C) 30 g of a water-insoluble polymer dissolved in 70 g of an organic solvent (for example, methyl ethyl ketone), a neutralizer (sodium hydroxide if the salt-forming groups are anionic, or acetic acid if the salt-forming groups are cationic) that can neutralize the salt-forming groups of the water-insoluble polymer to a degree of 100%, and 200 g of water, and the organic solvent is then removed from the mixed liquid, the dispersed state is stably present for at least one week at 25°C.

Here, the water-insoluble polymer refers to a polymer of which the dissolution amount is 10 g or less when the polymer is dried at 105°C for 2 hours and is then dissolved in 100 g of water at 25°C. The dissolution amount thereof is preferably 5 g or less and is more preferably 1 g or less. The dissolution amount is a dissolution amount when the polymer has been neutralized to a degree of 100% with sodium hydroxide or acetic acid, depending on the type of the salt-forming groups of the water-insoluble polymer.

The aqueous medium includes water and may include a hydrophilic organic solvent as necessary. In the present invention, the aqueous medium is preferably constituted by water and a hydrophilic organic solvent that accounts for 0.2% by mass or less with respect to the water, and is more preferably constituted by water.

From the viewpoint of self-dispersibility, the acrylic resin particles preferably include a water-insoluble polymer that contains a hydrophilic constituent unit and a constituent unit derived from an aromatic group-containing monomer. As necessary, the acrylic resin particles may further include other constituent units.

The hydrophilic constituent unit is not particularly limited as long as the hydrophilic constituent unit is derived from a hydrophilic group-containing monomer, and may be a constituent unit derived from one type of hydrophilic group-containing monomer or a constituent unit derived from two or more types of hydrophilic group-containing monomers. The hydrophilic group is not particularly limited, and may be a dissociative group or a nonionic hydrophilic group.

The hydrophilic group is preferably a dissociative group, and is more preferably an anionic dissociative group, from the viewpoint of promoting self-dispersion and from the viewpoint of the stability of the formed emulsified or dispersed state. Examples of the dissociative group include a carboxyl group, a phosphoric acid group, and a sulfonic acid group. Among these, a carboxyl group is preferable from the viewpoint of fixability in a case where a water-based ink composition is formed.

The hydrophilic group-containing monomer is preferably a dissociative group-containing monomer, and is more preferably a dissociative group-containing monomer having a dissociative group and an ethylenically unsaturated bond, from the viewpoints of self-dispersibility. Examples of the dissociative group-containing monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-methacryloyloxyethyl succinic acid.

Specific examples of the unsaturated sulfonic acid monomer include styrenesulfonic acid, 2-acrylamido-2-methylpropanesulfonic acid, 3-sulfopropyl (meth)acrylate, and a bis(3-sulfopropyl) itaconate ester.

Specific examples of the unsaturated phosphoric acid monomer include vinylphosphonic acid, vinyl phosphate, bis(methacryloyloxy ethyl) phosphate, diphenyl-2-acryloyloxy ethyl phosphate, diphenyl-2-methacryloyloxy ethyl phosphate, and dibutyl-2-acryloyloxy ethyl phosphate.

Among the dissociative group-containing monomers, unsaturated carboxylic acid monomers are preferable, acrylic monomers are more preferable, and acrylic acid and methacrylic acid are particularly preferable, from the viewpoints of dispersion stability and discharge stability.

The particles of the self-dispersing polymer in the present invention preferably include a polymer which has a carboxyl group and has an acid value of 25 to 100 mgKOH/g, from the viewpoint of self-dispersibility. Furthermore, from the viewpoint of self-dispersibility, the acid value is more preferably 25 to 80 mgKOH/g, and is even more preferably 30 to 65 mgKOH/g. When the acid value is 25 mgKOH/g or higher, the stability of self-dispersibility is improved, and when the acid value is 100 mgKOH/g or less, there is an advantage in water resistance.

The self-dispersing polymer in the present invention is preferably an acrylic resin including a constituent unit derived from an aromatic group-containing (meth)acrylate monomer (hereinafter, appropriately referred to as an aromatic group-containing monomer). The aromatic group-containing monomer is not particularly limited as long as the monomer is a compound containing an aromatic group and a polymerizable group. The aromatic group may be a group derived from an aromatic hydrocarbon or a group derived from an aromatic heterocycle. In the present invention, an aromatic group derived from an aromatic hydrocarbon is preferable from the viewpoint of particle shape stability in an aqueous medium.

In addition, the polymerizable group may be a condensation-polymerizable group or an addition-polymerizable group. The polymerizable group is preferably an addition-polymerizable group, and is more preferably a group containing an ethylenically unsaturated bond, from the viewpoint of particle shape stability in an aqueous medium.

The aromatic group-containing monomer is preferably a monomer having an aromatic group derived from an aromatic hydrocarbon and an ethylenically unsaturated bond. The aromatic group-containing monomers may be used singly or in a combination or two or more types thereof.

Examples of the aromatic group-containing monomer include phenoxyethyl (meth)acrylate, benzyl (meth)acrylate, phenyl (meth)acrylate, and styrenic monomers. Among these, from the viewpoints of the balance between hydrophilicity and hydrophobicity of polymer chains and ink fixability, an aromatic group-containing (meth)acrylate monomer is preferable, at least one type selected from the group consisting of phenoxyethyl (meth)acrylate, benzyl (meth)acrylate, and phenyl (meth)acrylate is more preferable, and phenoxyethyl (meth)acrylate and benzyl (meth)acrylate are even more preferable.

A polymer in which the content of the constituent unit derived from the aromatic group-containing monomer in the self-dispersing polymer in the present invention is 10% to 95% by mass is more preferable. When the content of the aromatic group-containing (meth)acrylate monomer is 10% to 95% by mass, the stability of the self-emulsified or self-dispersed state is improved, and increase in the ink viscosity can be further suppressed. From the viewpoints of the stability of the self-dispersed state, stabilization of the particle shape in an aqueous medium due to hydrophobic interaction between aromatic rings, and reduction in the amount of water-soluble components through hydrophobization of the particles to an appropriate degree, the content of the aromatic group-containing (meth)acrylate monomer is more preferably 15% to 90% by mass, even more preferably 15% to 80% by mass, and particularly preferably 25% to 70% by mass.

The self-dispersing polymer may include, for example, a constituent unit derived from an aromatic group-containing monomer and a constituent unit derived from a dissociative group-containing monomer. The self-dispersing polymer may further include other constituent units as necessary.

The monomer that is used to form the other constituent units is not particularly limited as long as the monomer is copolymerizable with the aromatic group-containing monomer and the dissociative group-containing monomer. Among these, from the viewpoints of the flexibility of the polymer skeleton and the ease of control of the glass-transition temperature (Tg), an alkyl group-containing monomer is preferable.

Examples of the alkyl group-containing monomer include an alkyl (meth)acrylate such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate, an ethylenically unsaturated monomer having a hydroxyl group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate, an alkyl ester of (meth)acrylic acid such as a dialkylaminoalkyl (meth)acrylate including dimethylaminoethyl (meth)acrylate (preferably, an alkyl ester having 1 to 4 carbon atoms of (meth)acrylic acid), and a (meth)acrylamide-based monomer such as a (meth)acrylamide such as an N-hydroxyalkyl (meth)acrylamide including N-hydroxymethyl (meth)acrylamide, N-hydroxyethyl (meth)acrylamide, and N-hydroxybutyl (meth)acrylamide and an N-alkoxyalkyl (meth)acrylamide including N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth)acrylamide.

The molecular weight of the water-insoluble polymer that forms particles of the self-dispersing polymer is, in terms of weight average molecular weight, preferably 3000 to 200,000, and more preferably 5000 to 150,000, and even more preferably 10,000 to 100,000. When the weight average molecular weight is 3000 or higher, the amount of water-soluble components can be effectively reduced. In addition, when the weight average molecular weight is 200,000 or less, the self-dispersion stability can be enhanced.

The water-insoluble polymer that forms particles of the self-dispersing polymer preferably includes, from the viewpoint of the control of hydrophilicity and hydrophobicity of the polymer, a structural unit derived from an aromatic group-containing (meth)acrylate monomer (preferably, a structural unit derived from phenoxyethyl (meth)acrylate and/or a structural unit derived from benzyl (meth)acrylate) at a copolymerization ratio of 15% to 80% by mass with respect to the total mass of the self-dispersing polymer particles.

From the viewpoint of the control of hydrophilicity and hydrophobicity of the polymer, the water-insoluble polymer preferably includes a constituent unit derived from an aromatic group-containing (meth)acrylate monomer at a copolymerization ratio of 15% to 80% by mass, a constituent unit derived from a carboxyl group-containing monomer, and a constituent unit derived from an alkyl group-containing monomer (preferably, a structural unit derived from an alkyl ester of (meth)acrylic acid), more preferably includes a structural unit derived from phenoxyethyl (meth)acrylate and/or a structural unit derived from benzyl (meth)acrylate at a copolymerization ratio of 15% to 80% by mass, a constituent unit derived from a carboxyl group-containing monomer, and a constituent unit derived from an alkyl group-containing monomer (preferably, a structural unit derived from an alkyl ester having 1 to 4 carbon atoms of (meth)acrylic acid). Furthermore, the water-insoluble polymer preferably has an acid value of 25 to 100 mgKOH/g and a weight average molecular weight of 3000 to 200,000 and more preferably has an acid value of 25 to 95 mgKOH/g and a weight average molecular weight of 5000 to 150,000.

Hereinafter, specific examples (exemplary compounds D-01 to D-19) of the water-insoluble polymer that forms the acrylic resin particles are described. However, the present invention is not limited to these specific examples. In addition, mass ratios of copolymerization components are shown in brackets.
D-01: phenoxyethyl acrylate/methyl methacrylate/acrylic acid copolymer (50/45/5)
D-02: phenoxyethyl acrylate/benzyl methacrylate/isobutyl methacrylate/ methacrylic acid copolymer (30/35/29/6)
D-03: phenoxyethyl methacrylate/isobutyl methacrylate/methacrylic acid copolymer (50/44/6)
D-04: phenoxyethyl acrylate/methyl methacrylate/ethyl acrylate/acrylic acid copolymer (30/55/10/5)
D-05: benzyl methacrylate/isobutyl methacrylate/methacrylic acid copolymer (35/59/6)
D-06: styrene/phenoxyethyl acrylate/methyl methacrylate/acrylic acid copolymer (10/50/35/5)
D-07: benzyl acrylate/methyl methacrylate/acrylic acid copolymer (55/40/5)
D-08: phenoxyethyl methacrylate/benzyl acrylate/methacrylic acid copolymer (45/47/8)
D-09: styrene/phenoxyethyl acrylate/butyl methacrylate/acrylic acid copolymer (5/48/40/7)
D-10: benzyl methacrylate/isobutyl methacrylate/cyclohexyl methacrylate/methacrylic acid copolymer (35/30/30/5)
D-11: phenoxyethyl acrylate/methyl methacrylate/butyl acrylate/methacrylic acid copolymer (12/50/30/8)
D-12: benzyl acrylate/isobutyl methacrylate/acrylic acid copolymer (93/2/5)
D-13: styrene/phenoxyethyl methacrylate/butyl acrylate /acrylic acid copolymer (50/5/20/25)
D-14: styrene/butyl acrylate/acrylic acid copolymer (62/35/3)
D-15: methyl methacrylate/phenoxyethyl acrylate/acrylic acid copolymer (45/51/4)
D-16: methyl methacrylate/phenoxyethyl acrylate/acrylic acid copolymer (45/49/6)
D-17: methyl methacrylate/phenoxyethyl acrylate/acrylic acid copolymer (45/48/7)
D-18: methyl methacrylate/phenoxyethyl acrylate/acrylic acid copolymer (45/47/8)
D-19: methyl methacrylate/phenoxyethyl acrylate/acrylic acid copolymer (45/45/10)

A method of manufacturing the water-insoluble polymer that forms the resin particles is not particularly limited. Examples of the method include methods of copolymerization using well-known polymerization methods such as a method of forming covalent bonds between a surfactant and a water-insoluble polymer through emulsion polymerization in the presence of a polymerizable surfactant, a solution polymerization method of a monomer mixture containing a hydrophilic group-containing monomer and an aromatic group-containing monomer, and an aggregated state polymerization method. Among these polymerization methods, from the viewpoint of droplet ejection stability when an ink composition is formed, the solution polymerization method is preferable, and the solution polymerization method using an organic solvent is more preferable.

It is preferable that the resin particles contain a polymer synthesized in an organic solvent, the polymer have a carboxyl group (preferably, the acid value thereof is 25 to 50 mgKOH/g), and a part or the entirety of the carboxyl group of the polymer be neutralized to prepare a polymer dispersion having water as a continuous phase. That is, it is preferable that manufacturing of the polymer particles in the present invention be performed by providing a step of synthesizing a polymer in an organic solvent and a dispersing step of obtaining an aqueous dispersion in which at least a part of the carboxyl group of the polymer is neutralized.

The dispersing step preferably includes the following steps (1) and (2).
Step (1): a step of stirring a mixture containing a polymer (water-insoluble polymer), an organic solvent, a neutralizer, and an aqueous medium
Step (2): a step of removing the organic solvent from the mixture

The step (1) is preferably a treatment of first dissolving a polymer (water-insoluble polymer) in an organic solvent, and then gradually adding a neutralizer and an aqueous medium to the resultant, followed by mixing and stirring to obtain a dispersion. As the neutralizer and the aqueous medium are added to the water-insoluble polymer solution dissolved in the organic solvent, self-dispersing resin particles which have such a particle diameter that higher preservation stability is obtained without the need of a strong shear force can be obtained. The method of stirring the mixture is not particularly limited, and a generally-used mixing stirrer or, as necessary, a disperser such as an ultrasonic disperser or a high-pressure homogenizer may be used.

Preferable examples of the organic solvent include an alcohol-based solvent, a ketone-based solvent, and an ether-based solvent. The description of paragraph [0109] of JP2011-42150A can be applied to details of the organic solvent. Among these, the ketone-based solvent such as methyl ethyl ketone and the alcohol-based solvent such as isopropyl alcohol are preferable, and from the viewpoint of making a milder polarity change during phase inversion from an oil system to a water-based system, it is preferable to use isopropyl alcohol and methyl ethyl ketone in combination. By using the solvents in combination, self-dispersing polymer particles having fine particle diameters, which are free from aggregation precipitation or fusion between the particles, and have high dispersion stability, can be obtained.

The neutralizer is used to neutralize a part or the entirety of the dissociative group so as to allow the self-dispersing polymer to form a stable emulsified or dispersed state in water. In a case where the self-dispersing polymer has an anionic dissociative group (for example, a carboxyl group) as the dissociative group, examples of the neutralizer used include basic compounds such as an organic amine compound, ammonia, or an alkali metal hydroxide. The description of paragraph [0110] of JP2011-42150A can be applied to details of the neutralizer. Among these, from the viewpoint of stabilization of the dispersion of the self-dispersing polymer particles in water, sodium hydroxide, potassium hydroxide, triethylamine, and triethanolamine are preferable.

It is preferable that 5 to 120 mol% of the basic compounds with respect to 100 mol% of the dissociative group be used. Details of the ratio mentioned here are described in paragraph [0111] of JP2011-42150A.

In the step (2), the organic solvent is distilled from the dispersion obtained through the step (1) by a common method such as distillation under reduced pressure to convert the phase into a water-based system, thereby obtaining an aqueous dispersion of polymer particles. The organic solvent is substantially removed from the obtained aqueous dispersion, and the amount of the organic solvent is preferably 0.2% by mass or less, and more preferably 0.1% by mass or less.

The average particle diameter of the resin particles is, in terms of volume average particle diameter, preferably in a range of 20 to 200 nm, more preferably in a range of 20 to 150 nm, even more preferably in a range of from 20 to 100 nm, and particularly preferably in a range of 20 to 50 nm. When the average particle diameter is 20 nm or greater, production suitability is enhanced. When the average particle diameter is 400 nm or less, preservation stability is enhanced. There is no particular limitation regarding the particle diameter distribution of the polymer particles, and polymer particles which exhibit a wide particle diameter distribution or exhibit a monodispersed particle diameter distribution may be used. A combination of two or more types of the water-insoluble polymer particles may be used.

The average particle diameter and particle diameter distribution of the polymer particles can be obtained by measuring a volume average particle diameter thereof by a dynamic light scattering method using a particle size distribution analyzer NANOTRAC UPA-EX150 (manufactured by Nikkiso Co., Ltd.).

The glass transition temperature (Tg) of the resin particles is preferably 20°C to 200°C, more preferably 20°C to 180°C, and even more preferably 20°C to 170°C, from the viewpoint of preservation stability of the water-based ink composition.

The content of the resin particles in the ink composition in the present invention is, with respect to the total mass of the ink composition, preferably in a range of 0.2% to 10% by mass, more preferably in a range of 0.4% to 8% by mass, and most preferably 1% to 5% by mass, from the viewpoint of scratch resistance, preservation stability, prevention of kogation, and maintenance in addition to adhesion to an obtained image.

### [Other Additives]

The ink composition of the present invention can also use (d) the colorant and (e) the resin particles which are preferable additives described above and can further use a well-known additive used in the ink composition according to applications, in addition to (a) the polymer compound, (b) water, and (c) the water-soluble organic solvent, which are essential components, as long as the effects of the present invention are not damaged. Hereinafter, additives other than (d) the colorant and (e) the resin particles usable in the ink composition will be described.

### (Surfactant)

A surfactant can be added to the ink composition of the present invention.

Examples of surfactants that can be preferably used include anionic surfactants such as dialkyl sulfosuccinates, alkyl naphthalene sulfonates, and fatty acid salts; nonionic surfactants such as polyoxyethylene alkyl ethers, polyoxyethylene alkyl allyl ethers, acetylene glycols, and polyoxyethylene-polyoxypropylene block copolymers; and cationic surfactants such as alkylamines and quaternary ammonium salts. Particularly, anionic and nonionic surfactants can be preferably used.

In addition, in the present invention, polymer surfactants can also be used, and the following water-soluble resins are exemplified as preferable polymer surfactants. Examples of water-soluble resins preferably used include a styrene-acrylic acid-acrylic acid alkyl ester copolymer, a styrene-acrylic acid copolymer, a styrene-maleic acid-acrylic acid alkyl ester copolymer, a styrene-maleic acid copolymer, a styrene-methacrylic acid-acrylic acid alkyl ester copolymer, a styrene-methacrylic acid copolymer, a styrene-maleic acid half ester copolymer, a vinyl naphthalene-acrylic acid copolymer, a vinyl naphthalene-maleic acid copolymer and the like.

In addition, in the present invention, a silicone-based surfactant having polyalkylsiloxane or a fluorine-based surfactant having a fluorinated alkyl group can be preferably used.

In the case where the surfactant is used in the ink composition of the present invention, the addition amount is particularly 0.1% by mass or higher and 5% by mass or less in terms of solid content addition amount, and the solid content addition amount of the surfactant is particularly preferably 0.5% or higher and 2% or less by mass.

### (Sensitizing Dye)

In the present invention, well-known sensitizing dyes can be used in combination and it is preferable that the sensitizing dyes be used in combination. Regarding solubility, it is preferable that 0.5% by mass or higher of a sensitizing dye be dissolved in distilled water at room temperature, it is more preferable that 1% by mass or higher thereof be dissolved, and it is particularly preferable that 3% by mass or higher thereof be dissolved. As the sensitizing dye, photopolymerization initiator in which the water-insoluble polymerization initiator is dispersed can be used.

Examples of the well-known sensitizing dyes which can be used in combination include N-[2-hydroxy-3-(3,4-dimethyl-9-oxo-9H-thioxanthen-2-yloxy)propyl]-N,N,N-trimethylalumin -um chloride, benzophenone, thioxanthone, an anthraquinone derivative and a 3-acylcoumarin derivative, terphenyl, styryl ketone and 3-(aroylmethylene) thiazoline, camphorquinone, eosin, rhodamine, erythrosine, and modified products thereof modified to be water-soluble or dispersed products thereof. In addition, the compound expressed by the General Formula (i) described in JP2010-24276A or the compound expressed by the Formula (I) described in JP1994-107718A (JP-H6- 107718A) can be appropriately used.

In the ink according to the present invention, for the purpose of improving discharge stability, suitability for a print head or ink cartridge, preservation stability, image preserving properties, or other various performances, in addition to each of the constituent elements described above, various well-known additives including a viscosity adjusting agent, a surface tension adjusting agent, a specific resistance adjusting agent, a film-forming agent, a preservative, a dispersant, a surfactant, an ultraviolet ray absorbent, an antioxidant, an anti-fading agent, a fungicide, an anti-rust additive, a solid wetting agent, silica fine particles, and the like may be appropriately selected and used as necessary. Examples thereof include fine oil droplet particles such as liquid paraffin, dioctyl phthalate, or tricresyl phosphate, and silicon oil, ultraviolet ray absorbents described in JP1982-74193A (JP-S57-74193A), JP1982-87988A (JP-S57-87988A), and JP1987-261476A (JP-S62-261476A), anti-fading agents described in JP1982-74192A (JP-S57-74192A), JP1982-87989A (JP-S57-87989A), JP1985-72785A (JP-S60-72785A), JP1986-146591A (JP-S61-146591A), JP1989-95091A (JP-H1-95091A), and JP1991-13376A (JP-H3-13376A), fluorescence brightening agents described in JP 1984-4299A (JP-S59-42993 A), JP1984-52689A (JP-S59-52689A), JP1987-280069A (JP-S62-280069A), JP1986-242871A (JP-S61-242871A), and JP1992-219266A (JP-H4-219266A), and pH adjusting agents such as sulfuric acid, phosphoric acid, citric acid, sodium hydroxide, potassium hydroxide, and potassium carbonate.

### <Method of Preparing Ink Composition>

Methods of preparing the ink composition according to the present invention are not particularly limited. The ink composition can be prepared by stirring, mixing, and dispersing the respective components with a container-driven medium mill such as a ball mill, a centrifugal mill, or a planet ball mill, a high-speed rotation mill such as a sand mill, a medium stirring mill such as a stirring vessel-type mill, or a simple dispersing machine such as a disperser. The respective components are added in any order. Preferably, after an azo pigment, a polymer dispersant, and an organic solvent are pre-mixed, dispersing treatment is performed, and the obtained dispersion is mixed with a resin and an organic solvent. In this case, at the time of adding the components, or after adding the components, the mixture is evenly mixed using a simple stirrer such as a three-one motor, a magnetic stirrer, a disperser, or a homogenizer. The components may be mixed using a mixer such as a line mixer. Moreover, in order to make the dispersed particles be finer, the components may be mixed using a dispersing machine such as a beads mill or a high-pressure spray mill. In addition, depending on the type of the pigment or polymer dispersant, a resin may be added at the time of pre-mixing before the pigment is dispersed.

In the ink composition of the present invention, the surface tension thereof at 25°C is preferably 200 mN/m to 40 mN/m. The surface tension is measured using Automatic Surface Tensiometer CBVP-Z (manufactured by Kyowa Interface Science Co., LTD.) under the condition of 25°C. Also, the viscosity thereof is preferably 1 mPa·s to 40 mPa·s, and more preferably 3 mPa·s to 30 mPa·s. The viscosity of the ink composition is measured using VISCOMETER TV-22 (manufactured by TOKI SANGYO CO., LTD.) under the condition of 25°C.

### <Image Forming Method>

An image forming method of the present invention includes an ink imparting step of imparting the ink composition onto a recording medium and an irradiating step of the imparted ink composition with active energy rays. By performing the steps, an image is formed by the ink composition being fixed onto the recording medium.

### (Ink imparting Step)

Hereinafter, the ink imparting step in the image forming method of the present invention will be described.

In the present invention, the ink imparting step is not limited as long as the step is a step of imparting the ink composition onto a recording medium.

As an embodiment in which the ink composition of the present invention is imparted onto a recording medium, an embodiment in which the ink composition is imparted onto a recording medium by an ink jet method is particularly preferable.

In the image forming method of the present invention, an ink jet recording apparatus used in a case where the ink jet method is used is not particularly limited, and well-known ink jet recording apparatuses capable of achieving a desired resolution can be arbitrarily selected and used. That is, as long as the apparatus is a known ink jet recording apparatus including commercially available products, the ink composition can be discharged to a recording medium in the image forming method of the present invention.

Examples of the ink jet recording apparatus usable in the present invention include an apparatus having an ink supplying system, a temperature sensor, and heating means.

Examples of the ink supplying system include a source tank including the ink composition of the present invention, a supply pipe, an ink supplying tank immediately before an ink jet head, a filter, and a piezoelectric type ink jet head. The piezoelectric type ink jet head can be driven to discharge multi-size dots of preferably 1 to 100 pl and more preferably 8 to 30 pl at a resolution of preferably 320x320 to 4000x4000 dpi (dot per inch), more preferably 400×400 to 1600×1600 dpi, and even more preferably 720×720 dpi. In addition, "dpi" described in the present invention refers to the number of dots per 2.54 cm (1 inch).

In the ink imparting step, it is preferable that the discharged ink composition be maintained at a constant temperature, and thus it is preferable to provide means for stabilizing the temperature of the ink composition in the ink jet recording apparatus. The portion to be kept at a constant temperature includes the piping system from the ink tank (intermediate tank when there is an intermediate tank) to the ejection surface of the nozzle and all members. That is, from the ink supplying tank to the portion of the ink jet head can be insulated and heated.

The method of controlling temperature is not particularly limited. However, for example, it is preferable to provide plural temperature sensors to the respective portions in the piping so as to control heating according to the flow rate of the ink composition and environmental temperature. The temperature sensors can be arranged near the nozzle of the ink supplying tank and the ink jet head. Moreover, the head unit to be heated is preferably thermally blocked or insulated such that the body of the apparatus is not influenced by the temperature of the outside air. In order to shorten a rise time of a printer required for heating, or to reduce the loss of heat energy, it is preferable to insulate the heat unit from other portions and reduce thermal capacity of the whole heating unit.

It is preferable that the ink composition be discharged using the ink jet recording apparatus after the viscosity of the ink composition is lowered to preferably 3 mPa·s to 15 mPa·s and more preferably 3 mPa·s to 13 mPa·s by heating the ink composition to preferably 25°C to 80°C and more preferably 25°C to 50°C. Particularly, it is preferable to use an ink composition having a viscosity at 25°C of 50 mPa·s or less as the ink composition of the present invention, since such an ink composition can be discharged excellently. By using the method, a high degree of discharge stability can be realized.

When the ink composition is discharged, the temperature thereof is preferably constant. A control width of the temperature of the ink composition is set appropriately such that the width is preferably ±5°C of a preset temperature, more preferably ±2°C of a preset temperature, and most preferably ±1°C of a preset temperature.

In the present invention, a recording medium is not particularly limited, and a recording medium known as a support or a recording material can be used. Examples of the recording medium include paper, paper laminated with plastic (for example, polyethylene, polypropylene, and polystyrene), a metal plate (for example, aluminum, zinc, and copper), a plastic film (for example, a polyvinyl chloride resin, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinyl acetal), paper or a plastic film onto which the above metal is laminated or vapor-deposited, and the like.

Among these, since the ink composition of the present invention has excellent adhesion, the ink composition can be appropriately used for a nonabsorbing recording medium as the recording medium. A plastic base material such as polyvinyl chloride, polyethylene terephthalate, or polyethylene is preferable is preferable, a polyvinyl chloride resin base material is more preferable, and a polyvinyl chloride resin sheet or film is even more preferable.

### (Irradiating Step)

Hereinafter, a irradiating step in the image forming method of the present invention will be described.

The method of the irradiating step in the present invention is not particularly limited as long as the irradiating step is a step of irradiating the ink composition imparted onto the recording medium with active energy rays.

Examples of the active energy rays usable in the irradiating step include ultraviolet light (hereinafter, also referred to as UV light), visible light, and an electron beam, and UV light is preferably used.

A peak wavelength of the UV light is dependent on the absorption characteristics of the sensitizing dye used as necessary, and for example, 200 nm to 405 nm is preferable, 220 nm to 390 nm is more preferable, and 220 nm to 350 nm is even more preferable. In the present invention, when the sensitizing dye or the photopolymerization initiator is not used in combination, 200 nm to 310 nm is preferable and 200 nm to 280 nm is more preferable.

It is appropriate that the UV light irradiates an exposed surface at an irradiance of, for example, 10 mW/cm² to 2000 mW/cm² and preferably 20 mW/cm² to 1000 mW/cm².

As a UV light source, a mercury lamp, a gas solid-state laser, or the like is mainly used, and a mercury lamp, a metal halide lamp, a UV fluorescent lamp, or the like is widely known. In addition, the replacement of a GaN-based semiconductor with an ultraviolet light emitting device is very useful industrially and environmentally, and LED (UV-LED) and LD(UV-LD) have small sizes, long life spans, and high efficiency and need low cost, and thereby being expected as a UV light source. In the present invention, in the case where the sensitizing dye or the photopolymerization initiator is used in combination, a metal halide lamp, a high-pressure mercury lamp, a medium-pressure mercury lamp, a low-pressure mercury lamp, or a UV-LED is preferable, and in a case where the sensitizing dye or the photopolymerization initiator is not used in combination, a medium-pressure mercury lamp or a low-pressure mercury lamp is preferable, and a low-pressure mercury lamp is particularly preferable.

In the irradiating step, it is appropriate that the ink composition of the present invention imparted onto the recording medium is irradiated by the UV light, for example, for 0.01 seconds to 120 seconds, and preferably for 0.1 seconds to 90 seconds.

As irradiation conditions and basic irradiating methods, irradiation conditions and basic irradiating methods disclosed in JP1985-132767A (JP-S60-132767A) can be applied in the present invention in the same manner. Specifically, a method in which light sources provided on both sides of a head unit including an ink discharging device and the head unit and the light sources are scanned in a so-called shuttle method, or a method in which irradiation is performed by separate light sources that do not involve driving is preferable. Irradiation by the active energy rays is performed for a certain amount of time (for example, for 0.01 seconds to 120 seconds, preferably for 0.01 seconds to 60 seconds) after ink landing, heating, and drying.

### (Ink Drying Step)

It is preferable that the image forming method of the present invention further include an ink drying step (also referred to as a "heating and drying step") after the ink imparting step and before the irradiating step.

In the heating and drying step, the ink composition discharged on the recording medium is fixed preferably by evaporating at least a part of (b) water and (c) the water-soluble organic solvent using heating means.

The step of heating and drying the discharged ink composition of the present invention so as to be fixed (the heating and drying step) will be described.

The heating means may dry at least a part of (b) water and (c) the water-soluble organic solvent and is not limited. A heat drum, warm air, an infrared light lamp, a heating oven, heat plate heating, or the like can be used.

The heating temperature is preferably 40°C or higher, more preferably approximately 40°C to 150°C, and even more preferably approximately 40°C to 80°C. In addition, the drying and heating time is appropriately set considering the composition and printing speed of the ink composition.

The ink composition fixed by heating may further be photo-fixed by the active energy rays irradiated in the irradiating step as necessary. As described above, in the irradiating step, fixing by UV light is preferable.

### [Printed Article]

A printed material of the present invention is characterized by having an image in which the ink composition of the present invention is formed or an image recorded according to the image forming method of the present invention. The printed article of the present invention becomes a printed article which provides the recorded image with both excellent water resistance and solvent resistance and has excellent adhesion to a recording medium (high-temperature blocking properties).

### [Examples]

Hereinafter, the present invention will be described in detail based on examples, but the present invention is not limited to those examples. In addition, unless otherwise specified, "part(s)" and "%" are based on mass.

### [Examples 1 to 23, Examples 39 to 66, Comparative Examples 1 to 3, and Comparative Examples 7 to 11]

### [Preparation of Ink Composition]

(a) The specific copolymers or comparative polymer compounds, (b) water, (c) the water-soluble organic solvent, the dispersion of (d) the pigment (colorant), and the surfactant were mixed and stirred at 250 rev/min (Examples 1 to 23 and Comparative Examples 1 to 3) or at 500 rev/min (Examples 39 to 66 and Comparative Examples 7 to 11) using a mixer (L4R manufactured by Silverson Machines, Inc.) to achieve the compositions shown in the following Tables 4, 6, and 7, thereby preparing respective crude ink compositions.

Each of the obtained crude ink compositions was packed in a plastic disposable syringe and was filtered by a filter with a pore diameter of 5 µm made of polyvinylidene fluoride (PVDF) (Millex-SV, 25 mm in diameter, manufactured by Millipore Corporation), thereby obtaining ink compositions of Examples 1 to 23, Examples 39 to 66, Comparative Examples 1 to 3, and Comparative Examples 7 to 11 as finished products.

In addition, the (a) the specific copolymer (the compounds A-1 to A-48 described above) according to the present invention and compounds B-1 to B-8 which are the comparative polymer compounds were synthesized based on the description of JP1977-988A (JP-S52-988A).

Among these, synthesis methods of (a) the specific copolymers A-1, A-3, A-5, A-8, and A-11 will be described in detail as follows.

### [Synthesis Example 1: Synthesis of (a) Specific Copolymers A-1, A-3, A-5, A-8, and A-11]

### <Synthesis of Monomer 1>

75 g of toluene and 42.0 g of dimethylmaleic acid anhydride (manufactured by Sigma-Aldrich Co. LLC.) were introduced to a 500 ml three-necked flask having the Dean-Stark distillation apparatus, and were stirred and heated by a stirrer (manufactured by Shinto Scientific Co., Ltd.: Three-one Motor) to increase the temperature thereof to 50°C. 25.0 g of 3-amino-1-propanol was dropped for 30 minutes and was stirred for 4 hours. After decreasing the temperature to 60°C, 0.042 g of p-methoxyphenol (manufactured by Wako Pure Chemical Industries, Ltd.) and 6.2 g of sulfuric acid (manufactured by Wako Pure Chemical Industries, Ltd.) were added, and 43.0 g of methacrylic acid (manufactured by Wako Pure Chemical Industries, Ltd.) was further dropped for 30 minutes. After finishing dropping, the resultant was heated at reflux for 3 hours. The reacting solution was neutralized by 29 g of a 50w/v% sodium hydroxide aqueous solution (manufactured by Wako Pure Chemical Industries, Ltd.), and thereafter 200ml of toluene and 100 ml of water were added and separated into an organic layer and an aqueous layer. After washing the organic layer with saturated saline twice, 30 mg of p-methoxy phenol was added to the organic layer, and the solvent was distilled through vacuum pressure reduction, thereby obtaining 64.5 g of Monomer 1. Production of an object was checked by ¹H NMR

### <Synthesis of (a) Specific Copolymer A-1>

20 g of 2-pyrrolidone (manufactured by Wako Pure Chemical Industries, Ltd.) was added to a nitrogen-substituted three-necked flask having the 200 mL stirrer. After increasing the temperature to 80°C under the nitrogen stream, a mixed liquid of 20 g of 2-pyrrolidone, 10.0 g of the Monomer 1, 6.8 g of n-butyl methacrylate (manufactured by Wako Pure Chemical Industries, Ltd.), 3.2 g of methacrylic acid, 0.030 g of 3-mercaptopropionic acid (manufactured by Tokyo Chemical Industry Co., Ltd.), and 0.079 g of 2,2'-dimethyl azobisisobutyrate (manufactured by Wako Pure Chemical Industries, Ltd.) was dropped for 3 hours. After dropping, 0.050 g of 2,2'-dimethyl azobisisobutyrate was added respectively after 2 hours and after 4 hours and was subjected to a reaction for 2 hours, thereby obtaining (a) the specific copolymer A-1. The synthesized (a) specific copolymer A-1 was re-precipitated in a large amount of hexane, was thereafter dissolved by a sodium hydrogen carbonate aqueous solution (manufactured by Wako Pure Chemical Industries, Ltd.) to be adjusted to a 20% aqueous solution, thereby obtaining an aqueous solution of (a) the specific copolymer A-1. In addition, the amount of sodium hydrogen carbonate was adjusted to achieve a desired degree of neutralization. By measuring the obtained aqueous solution through GPC, it was confirmed that the weight average molecular weight was 72,300.

### <Synthesis of (a) Specific Copolymers A-3, A-5, A-8, and A-11>

(a) The specific copolymers A-3, A-5, A-8, and A-11 were prepared by adjusting appropriately the amounts of raw material monomers and mercaptopropionic acid, so as to achieve the structures described as the structural formulas of the (a) the specific copolymers.

Each of the synthesized (a) specific copolymers was re-precipitated in a large amount of hexane, and was thereafter dissolved by a sodium hydrogen carbonate aqueous solution (manufactured by Wako Pure Chemical Industries, Ltd.) to be adjusted to a 20% aqueous solution. The amount of sodium hydrogen carbonate was adjusted to achieve a desired degree of neutralization.

The compositions of the ink compositions according to the Examples and the Comparative Examples are shown in Tables 4, 6, and 7. Here, "-" in the tables represents no content.

### [Examples 24 to 38 and Comparative Examples 4 to 6]

(a) The specific copolymers or comparative polymer compounds, (b) water, (c) the water-soluble organic solvent, (e) the resin particles, the dispersion of (d) the pigment (colorant), and the surfactant were mixed and stirred at 250 rev/min using a mixer (L4R manufactured by Silverson Machines, Inc.) to achieve the compositions shown in the following Table 5, thereby preparing respective crude ink compositions.

Each of the obtained crude ink compositions was packed in a plastic disposable syringe and was filtered by a filter with a pore diameter of 5 µm made of polyvinylidene fluoride (PVDF) (Millex-SV, 25 mm in diameter, manufactured by Millipore Corporation), thereby obtaining ink compositions of Examples 24 to 38 and Comparative Examples 4 to 6 as finished products.

The comparative polymer compound C-1 was synthesized as follows.

The comparative polymer compound C-1 was prepared in the same manner as "Synthesis of the A-1", except that the amount of raw material monomers and mercaptopropionic acid were appropriately adjusted, so as to achieve the structure described later, and was thereafter dissolved by a sodium hydrogen carbonate aqueous solution to be adjusted to a 20% aqueous solution. The amount of sodium hydrogen carbonate was adjusted to achieve a desired degree of neutralization.

The compositions of the ink compositions 27 to 44 according to the Examples and the Comparative Examples are shown in Table 5.

**[Table 4]**

| | | (a) Polymer | | | (e) Organic solvent | | (c) Water | (d) Pigment dispersion | | Surfactant |
|---|---|---|---|---|---|---|---|---|---|---|
| | | Abbrev | Amount of use (g) | SP value (MPa^{1/2}) | 2-pyrrolidone (g) | MPD (g) | Amount of use (g) | Pigment dispersion | Amount of use (g) | FSN (g) |
| Example 1 | Ink composition 1 | A-1 | 10 | 22.3 | 20 | - | 34 | M dispersion | 35 | 1 |
| Example 2 | Ink composition 2 | A-2 | 10 | 21.2 | 20 | - | 34 | M dispersion | 35 | 1 |
| Example 3 | Ink composition 3 | A-3 | 10 | 22.2 | 20 | - | 34 | M dispersion | 35 | 1 |
| Example 4 | Ink composition 4 | A-4 | 10 | 22.9 | 20 | - | 34 | M dispersion | 35 | 1 |
| Example 5 | Ink composition 5 | A-5 | 10 | 21.5 | 20 | - | 34 | M dispersion | 35 | 1 |
| Example 6 | Ink composition 6 | A-6 | 10 | 22.2 | 20 | - | 34 | M dispersion | 35 | 1 |
| Example 7 | Ink composition 7 | A-7 | 10 | 21.7 | 20 | - | 34 | M dispersion | 35 | 1 |
| Example 8 | Ink composition 8 | A-8 | 10 | 22.5 | 20 | - | 34 | M dispersion | 35 | 1 |
| Example 9 | Ink composition 9 | A-1 | 10 | 22.3 | 20 | 9 | 45 | C dispersion | 15 | 1 |
| Example 10 | Ink composition 10 | A-1 | 10 | 22.3 | 20 | - | 49 | Y dispersion | 20 | 1 |
| Example 11 | Ink composition 11 | A-1 | 10 | 22.3 | 20 | - | 49 | K dispersion | 20 | 1 |
| Example 12 | Ink composition 12 | A-5 | 2 | 21.5 | 20 | - | 42 | M dispersion | 35 | 1 |
| Example 13 | Ink composition 13 | A-5 | 5 | 21.5 | 20 | - | 39 | M dispersion | 35 | 1 |
| Example 14 | Ink composition 14 | A-5 | 20 | 21.5 | 20 | - | 24 | M dispersion | 35 | 1 |
| Example 15 | Ink composition 15 | A-1 | 10 | 22.3 | 20 | - | 69 | No | - | 1 |
| Example 16 | Ink composition 16 | A-9 | 10 | 20.8 | 20 | - | 34 | M dispersion | 35 | 1 |
| Example 17 | Ink composition 17 | A-10 | 10 | 21.9 | 20 | - | 34 | M dispersion | 35 | 1 |
| Example 18 | Ink composition 18 | A-11 | 10 | 22.1 | 20 | - | 34 | M dispersion | 35 | 1 |
| Example 19 | Ink composition 19 | A-12 | 10 | 22.1 | 20 | - | 34 | M dispersion | 35 | 1 |
| Example 20 | Ink composition 20 | A-13 | 10 | 20.8 | 20 | - | 34 | M dispersion | 35 | 1 |
| Example 21 | Ink composition 21 | A-14 | 10 | 22.9 | 20 | - | 34 | M dispersion | 35 | 1 |
| Example 22 | Ink composition 22 | A-16 | 10 | 21.0 | 20 | - | 34 | M dispersion | 35 | 1 |
| Example 23 | Ink composition 23 | A-21 | 10 | 22.1 | 20 | - | 34 | M dispersion | 35 | 1 |
| Comparative Example 1 | Ink composition 24 | B-1 | 10 | 20.5 | 20 | - | 34 | M dispersion | 35 | 1 |
| Comparative Example 2 | Ink composition 25 | B-2 | 10 | 23.3 | 20 | - | 34 | M dispersion | 35 | 1 |
| Comparative Example 3 | Ink composition 26 | B-3 | 10 | 23.7 | 20 | - | 34 | M dispersion | 35 | 1 |

**[Table 5]**

| | | (a) Polymer | | (e) Resin particles | | (b) Water | (d) Pigment dispersion | | (c) Organic solvent | | Surfactant |
|---|---|---|---|---|---|---|---|---|---|---|---|
| | | Abbrev | Amount of use (g) | Compound | Addition amount (g) | Amount of use (g) | Pigment dispersion | Amount of use (g) | Compound | Amount of use (g) | FSN (g) |
| Example 24 | Ink composition 27 | A-1 | 10 | Acrylic | 3 | 56.6 | C dispersion | 15 | 2-pyrrolidone | 15 | 0.4 |
| Example 25 | Ink composition 28 | A-5 | 10 | Acrylic | 3 | 56.6 | C dispersion | 15 | 2-pyrrolidone | 15 | 0.4 |
| Example 26 | Ink composition 29 | A-11 | 10 | Acrylic | 3 | 56.6 | C dispersion | 15 | 2-pyrrolidone | 15 | 0.4 |
| Example 27 | Ink composition 30 | A-8 | 10 | Acrylic | 3 | 56.6 | C dispersion | 15 | 2-pyrrolidone | 15 | 0.4 |
| Example 28 | Ink composition 31 | A-3 | 5 | Urethane-b ased | 3 | 61.6 | C dispersion | 15 | 2-pyrrolidone | 15 | 0.4 |
| Example 29 | Ink composition 32 | A-3 | 10 | Urethane-b ased | 3 | 56.6 | C dispersion | 15 | 2-pyrrolidone | 15 | 0.4 |
| Example 30 | Ink composition 33 | A-3 | 15 | Urethane-b ased | 3 | 51.6 | C dispersion | 15 | 2-pyrrolidone | 15 | 0.4 |
| Example 31 | Ink composition 34 | A-3 | 10 | Urethane-b ased | 1 | 58.6 | C dispersion | 15 | 2-pyrrolidone | 15 | 0.4 |
| Example 32 | Ink composition 35 | A-3 | 10 | Urethane-b ased | 5 | 54.6 | C dispersion | 15 | 2-pyrrolidone | 15 | 0.4 |
| Example 33 | Ink composition 36 | A-3 | 10 | Urethane-b ased | 3 | 51.6 | Y dispersion | 20 | 2-pyrrolidone | 15 | 0.4 |
| Example 34 | Ink composition 37 | A-3 | 10 | Urethane-b ased | 3 | 51.6 | K dispersion | 20 | 2-pyrrolidone | 15 | 0.4 |
| Example 35 | Ink composition 38 | A-3 | 10 | Urethane-b ased | 3 | 36.6 | M dispersion | 35 | 2-pyrrolidone | 15 | 0.4 |
| Example 36 | Ink composition 39 | A-3 | 12 | Urethane-b ased | 3 | 69.6 | No | - | 2-pyrrolidone | 15 | 0.4 |
| Example 37 | Ink composition 40 | A-1 | 10 | - | - | 54.6 | K dispersion | 20 | 2-pyrrolidone | 15 | 0.4 |
| Example 38 | Ink composition 41 | A-3 | 10 | - | - | 54.6 | K dispersion | 20 | 2-pyrrolidone | 15 | 0.4 |
| Comparative Example 4 | Ink composition 42 | C-1 | 10 | Acrylic | 5 | 59.6 | C dispersion | 15 | 2-pyrrolidone | 15 | 0.4 |
| Comparative Example 5 | Ink composition 43 | - | - | Acrylic | 5 | 69.6 | C dispersion | 15 | 2-pyrrolidone | 15 | 0.4 |
| Comparative Example 6 | Ink composition 44 | - | - | Urethane-b ased | 5 | 69.6 | C dispersion | 15 | 2-pyrrolidone | 15 | 0.4 |

**[Table 6]**

| | | (a) Polymer compound | | | (c) Water-soluble organic solvent 2-pyrrolidone | | (b) Water | (d) Pigment dispersion | | Surfactant |
|---|---|---|---|---|---|---|---|---|---|---|
| | | Abbrev | Amount of use (g) | SP value (MPa1/2) | 2-pyrrolidone (g) | MPD (g) | Amount of use (g) | Pigment dispersion | Amount of use (g) | FSN (g) |
| Example 39 | Ink composition 45 | A-25 | 10 | 22.3 | 20 | - | 34 | M dispersion | 35 | 1 |
| Example 40 | Ink composition 46 | A-26 | 10 | 22.2 | 20 | - | 34 | M dispersion | 35 | 1 |
| Example 41 | Ink composition 47 | A-27 | 10 | 21.3 | 20 | - | 34 | M dispersion | 35 | 1 |
| Example 42 | Ink composition 48 | A-2 | 10 | 21.2 | 20 | 9 | 45 | C dispersion | 15 | 1 |
| Example 43 | Ink composition 49 | A-2 | 10 | 21.2 | 20 | - | 49 | Y dispersion | 20 | 1 |
| Example 44 | Ink composition 50 | A-2 | 10 | 21.2 | 20 | - | 49 | K dispersion | 20 | 1 |
| Example 45 | Ink composition 51 | A-27 | 2 | 22.2 | 20 | - | 42 | M dispersion | 35 | 1 |
| Example 46 | Ink composition 52 | A-27 | 5 | 22.2 | 20 | - | 39 | M dispersion | 35 | 1 |
| Example 47 | Ink composition 53 | A-27 | 20 | 22.2 | 20 | - | 24 | M dispersion | 35 | 1 |
| Example 48 | Ink composition 54 | A-37 | 10 | 21.5 | 20 | - | 34 | M dispersion | 35 | 1 |
| Example 49 | Ink composition 55 | A-27 | 10 | 22.2 | 20 | - | 69 | No | - | 1 |
| Comparative Example 7 | Ink composition 56 | B-4 | 10 | 20.5 | 20 | - | 34 | M dispersion | 35 | 1 |
| Comparative Example 8 | Ink composition 57 | B-5 | 10 | 23.3 | 20 | - | 34 | M dispersion | 35 | 1 |
| Comparative Example 9 | Ink composition 58 | B-6 | 10 | 23.3 | 20 | - | 34 | M dispersion | 35 | 1 |

**[Table 7]**

| | (a) Polymer compound | | | (c) Water-soluble organic solvent 2-pyrrolidone | | (b) Water | (d) Pigment dispersion | | Surfactant |
|---|---|---|---|---|---|---|---|---|---|
| | Abbrev | Amount of use (g) | SP value (MPa^{1/2}) | 2-pyrrolidone (g) | MPD (g) | Amount of use (g) | Pigment dispersion | Amount of use (g) | FSN (g) |
| Example 50 | A-38 | 10 | 22.0 | 20 | - | 34 | M dispersion | 35 | 1 |
| Example 51 | A-39 | 10 | 22.0 | 20 | - | 34 | M dispersion | 35 | 1 |
| Example 52 | A-40 | 10 | 22.5 | 20 | - | 34 | M dispersion | 35 | 1 |
| Example 53 | A-41 | 10 | 22.1 | 20 | - | 34 | M dispersion | 35 | 1 |
| Example 54 | A-42 | 10 | 22.0 | 20 | - | 34 | M dispersion | 35 | 1 |
| Example 55 | A-43 | 10 | 22.9 | 20 | - | 34 | M dispersion | 35 | 1 |
| Example 56 | A-44 | 10 | 21.7 | 20 | - | 34 | M dispersion | 35 | 1 |
| Example 57 | A-45 | 10 | 22.6 | 20 | - | 34 | M dispersion | 35 | 1 |
| Example 58 | A-46 | 10 | 20.9 | 20 | - | 34 | M dispersion | 35 | 1 |
| Example 59 | A-40 | 10 | 22.5 | 20 | 9 | 45 | C dispersion | 15 | 1 |
| Example 60 | A-40 | 10 | 22.5 | 20 | - | 49 | Y dispersion | 20 | 1 |
| Example 61 | A-40 | 10 | 22.5 | 20 | - | 49 | K dispersion | 20 | 1 |
| Example 62 | A-41 | 2 | 22.1 | 20 | - | 42 | M dispersion | 35 | 1 |
| Example 63 | A-41 | 5 | 22.1 | 20 | - | 39 | M dispersion | 35 | 1 |
| Example 64 | A-41 | 20 | 22.1 | 20 | - | 24 | M dispersion | 35 | 1 |
| Example 65 | A-41 | 10 | 22.1 | 20 | 20 - 69 | 69 | No | - | 1 |
| Example 66 | A-47 | 10 | 22.4 | 20 | - | 69 | M dispersion | 35 | 1 |
| Comparative Example 10 | B-7 | 10 | 18.9 | 20 | - | 34 | M dispersion | 35 | 1 |
| Comparative Example 11 | B-8 | 10 | 23.3 | 20 | - | 34 | M dispersion | 35 | 1 |

The structures, molecular weights (Nw), and SP values of (a) the specific copolymers shown in Tables 4 to 7 are as shown in the Tables 1 to 3. In addition, the structures of the representative (a) the specific copolymers and the comparative polymer compounds are shown as follows. In addition, the composition ratio of each of the structural units described in each of the following polymer compounds is based on mass.

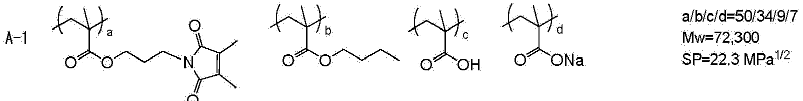

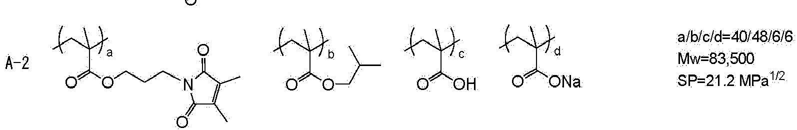

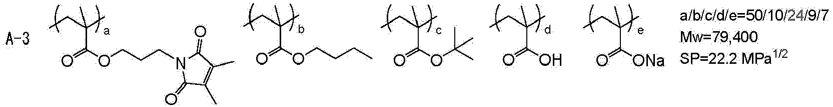

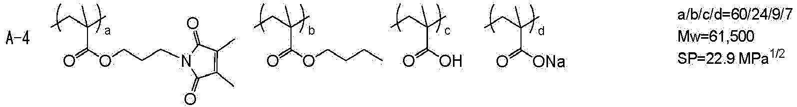

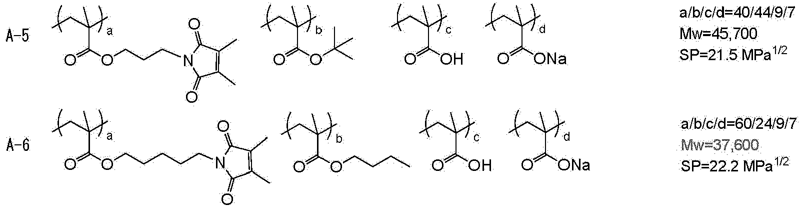

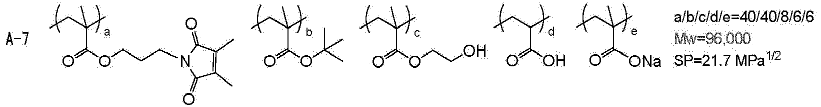

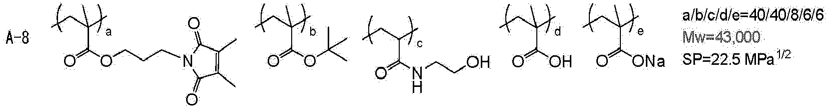

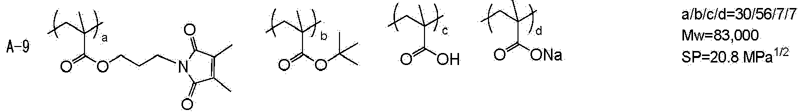

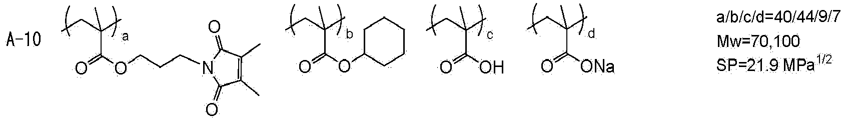

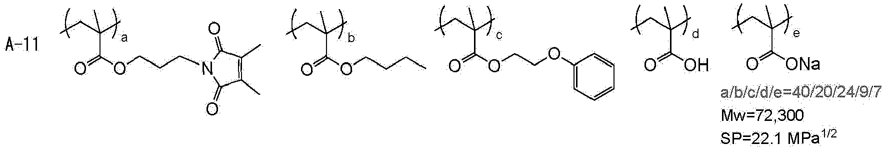

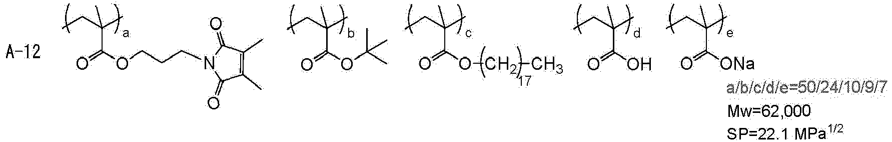

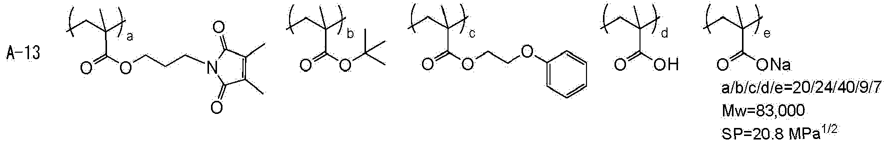

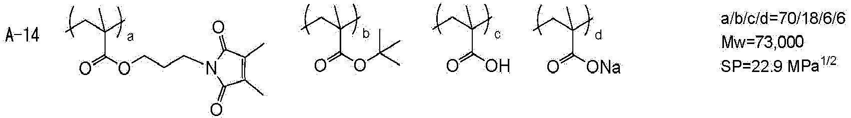

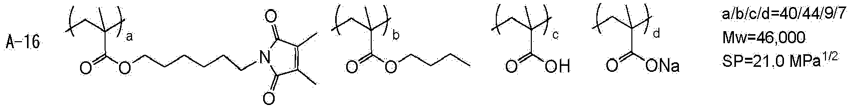

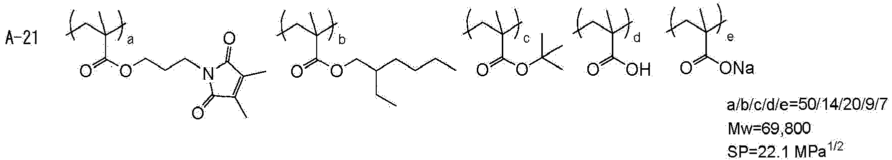

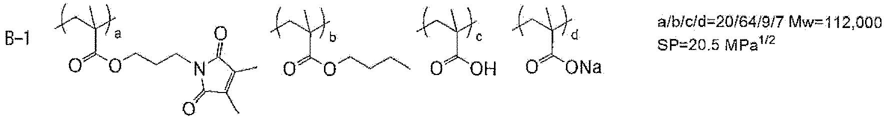

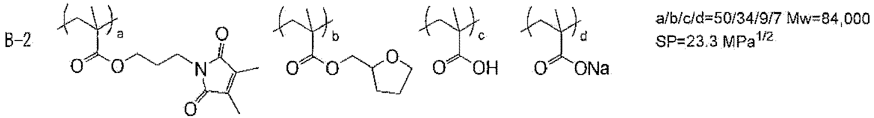

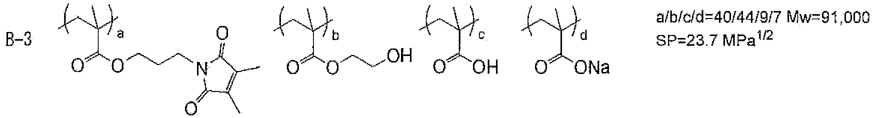

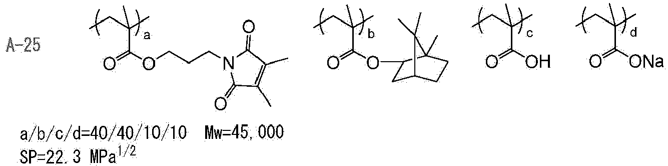

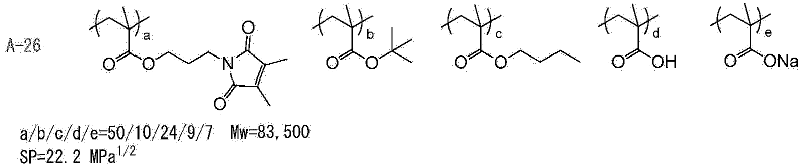

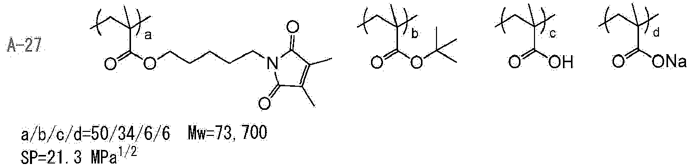

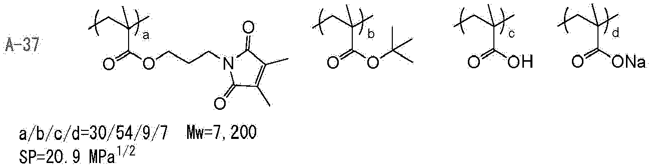

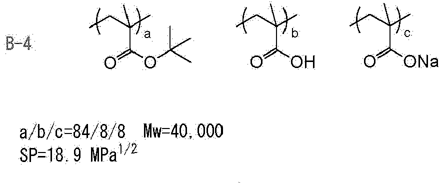

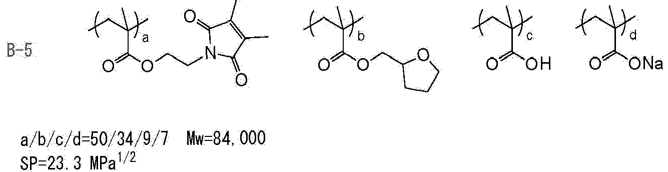

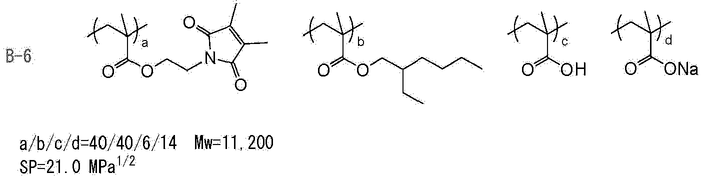

**[Table 8]**

| | (a-1) | | (a-2) | | | | | | (a-3) | | (a-4) | | Mw | SP value (MPa^{1/2}) |
|---|---|---|---|---|---|---|---|---|---|---|---|---|---|---|
| | Name | (%) | Name | (%) | Name | (%) | Name | (%) | Name | (%) | Name | (%) | | |
| B-7 | - | - | MAA | 8 | MAA-Na | 8 | - | - | tBMA | 84 | - | - | 40000 | 18.9 |
| B-8 | monomer 1 | 50 | MAA | 9 | MAA-Na | 7 | - | - | MMA | 34 | - | - | 84000 | 23.3 |

As (b) water, ion-exchange water was used. Other components are as follows.

### (c) Water-Soluble Organic Solvent

2-pyrrolidone (manufactured by Wako Pure Chemical Industries, Ltd.)
MPD (2-methyl-1,3-propanediol, manufactured by Tokyo Chemical Industry Co., Ltd.)

### (Surfactant)

ZONYL FSN (fluorine-based surfactant, manufactured by Aldrich Chemical Company)

### (d) Pigment Dispersion

M dispersion: magenta pigment dispersion Projet Magenta APD 1000 (manufactured by FUJIFILM Imaging Colorants Inc.)
C dispersion: cyan pigment dispersion Projet Cyan APD 1000 (manufactured by FUJIFILM Imaging Colorants Inc.)
K dispersion: black pigment dispersion Projet Black APD 1000 (manufactured by FUJIFILM Imaging Colorants Inc.)
Y dispersion: yellow pigment dispersion Projet Yellow APD 1000 (manufactured by FUJIFILM Imaging Colorants Inc.)

### (e) Resin Particles

Urethane-based: polyether-based urethane resin (Acrylic Resin WBR-016 U manufactured by Taisei Fine Chemical Co., Ltd., Tg: 20°C, volume average particle diameter: about 30 nm)
Acrylic: phenoxy ethyl acrylate/methyl methacrylate/acrylic acid copolymer (50/45/5) (volume average particle diameter of 50 nm)

In addition, the viscosity of the manufactured ink composition was in a range of 4 mPa·s to 10 mPa·s at room temperature.

### <Evaluation >

The obtained ink composition was coated at a thickness of 12 µm onto a vinyl chloride sheet 8 cm square (manufactured by Avery Dennison Corporation, AVERY 400 GLOSS WHITE PERMANENT) by using a No. 2 bar of K hand coater manufactured by PK PRINT COAT INSTRUMENTS.

Moreover, after drying was performed thereon at 60°C for 3 minutes, exposure was performed by a low-pressure mercury lamp under the condition of an energy of 1000 mJ/cm², thereby obtaining a printed article having a cured film (solid image) on the vinyl chloride sheet.

The following evaluation was performed using the obtained printed article. The evaluation results are shown in Tables 9 to 11.

### < Evaluation of Water Resistance>

A surface on a side having the cured film in the obtained printed article was rubbed using a cotton swab impregnated with ion-exchange water and was evaluated according to the following evaluation criteria. The evaluation results are shown in Tables 9 to 12. In addition, A and B are levels with no problem in practice.

### -Evaluation Criteria-

A: No changes in the image were observed even when rubbed 50 times or more.
B: The concentration of the image was degraded when rubbed 10 to 49 times.
C: The concentration of the image was significantly degraded when rubbed 0 to 9 times.

### < Evaluation of Solvent Resistance>

A surface on a side having the cured film in the obtained printed article was rubbed using a cotton swab impregnated with isopropyl alcohol and was evaluated according to the following evaluation criteria. The evaluation results are shown in Tables 9 to 12. In addition, A and B are levels with no problem in practice.

### -Evaluation Criteria-

A: No changes in the image were observed even when rubbed 50 times or more.
B: The concentration of the image was degraded when rubbed 10 to 49 times.
C: The concentration of the image was significantly degraded when rubbed 0 to 9 times.

### <Bleeding Properties Evaluation 1: Examples 1 to 23, Examples 39 to 66, Comparative Examples 1 to 3, and Comparative Examples 7 to 11>

As an ink jet recording apparatus, a commercially available ink jet printer (manufactured by FUJIFILM Dimatix, DMP-2831) was prepared. The obtained respective ink compositions were filled in the ink jet printer, and fine lines having a width of 2 dots were recorded at a length of 5 cm in a polyvinyl chloride substrate (manufactured by Avery Denisson Corporation, AVERY 400 GLOSS WHITE PERMANENT) heated at 40°C. After discharge was stopped, bleeding of the obtained fine lines was visually evaluated.

In a case of using the ink composition described in the Examples, all the ink composition rarely had bleeding, and fine lines were favorably in a straight state.

### <Evaluation of High-Temperature Blocking Properties>

Using the ink jet recording method applied to evaluate the bleeding properties, a solid image having a size of 5 cmx5 cm and having an image portion of which the average film thickness after drying is 1.2 µm was drawn. Two obtained printed articles were overlapped so that the coated surfaces are aligned with each other and were pressurized at 40°C and under a pressure of 1 kg/cm² for 1 hour. Thereafter, a state after the two coated surfaces are peeled was observed. The evaluation results are shown in Table 11.

### -Evaluation Criteria-

A: The coating had no peeled portion, and there was no sound during peeling.
B: Although the coating had no peeled portion, sound occurs during peeling.
C: Although the coating had no peeled portion, slight transfer to the coating was observed.
D: The coating had a peeled portion.

### <Ink Stability>

After the ink compositions were preserved at 60°C for one week, the dispersed state of the pigment in each of the compositions was visually evaluated, and a rate of change in the viscosity during preservation was measured by measuring the viscosity of each of the compositions for classification in lanks according to the following criteria. The evaluation results are shown in Table 9 or 11.

### -Evaluation Criteria-

A: Level with high stability, at which no precipitates had generated and the rate of increase in the viscosity was less than 10%.
B: Level with no problem in discharge, at which no precipitates had generated and the rate of increase in the viscosity was 10% or higher and less than 20%.
C: Level with problems in practice, at which although no precipitates had generated, the rate of increase in the viscosity was 20% or higher, and discharge properties were degraded.

### <Adhesion>

As an adhesion evaluation method, a cross hatch test (JIS K5600-5-6, in 2004)was performed. Images used in the adhesion test were formed by printing a solid image having a size of 5 cm×10 cm on a base material using the ink jet printer DMP-2831. The base material on which the image was printed was dried at 60°C for 3 minutes and was thereafter exposed by a low-pressure mercury lamp under the condition of an energy of 1000 mJ/cm², thereby obtaining a printed article having a cured film (solid image) on the polyvinyl chloride base material. Thereafter, a cross hatch test was performed on each printed article. In addition, as the base material, in Table 9, the polyvinyl chloride base material (AVERY 400 GLOSS WHITE PERMANENT, manufactured by Avery Dennison Corporation), and in Table 10, a polyethylene terephthalate film (Viewful TP-188, KIMOTO CO., LTD.: described as "TP-188" in Table 5), and synthetic paper (Viewful YP200, KIMOTO CO., LTD.: described as "YP200" in Table 5) were used. In addition, evaluation was performed for classification into 6 stables from 0 to 5. Here, the evaluation classification 0 means that the edge of a cut was completely smooth and thus there was no peeled portion even with the scale of a lattice, and evaluation was made by the following classification.

An incision was made into a depth that reached the base material for evaluation between the ink and the base material. There was no problem in practice at the following evaluation classes A and B. The evaluation results are shown in Table 9 or Table 10.
A: JIS K5600-5-6 class 0 or 1
B: JIS K5600-5-6 class 2 or 3
C: JIS K5600-5-6 class 4 or 5

### <Evaluation of Bleeding Suppressing Properties>

As the ink jet recording apparatus, an ink jet printer (manufactured by FUJIFILM Dimatix, DMP-2831) was prepared. The obtained respective ink compositions were filled in the ink jet printer, and 20 straight lines having a width of 100 µm and a length of 1 cm were printed at an interval of 100 µm in a direction perpendicular to the head scanning direction on a polyvinyl chloride substrate (manufactured by Avery Denisson Corporation, AVERY 400 GLOSS WHITE PERMANENT) heated at 40°C. The shapes of the straight lines were visually observed, and were evaluated by the following criteria. In a case of using the ink compositions 1 to 23 described in the Examples, all the ink compositions had no bleeding, and the fine lines are favorably in a straight line state. The evaluation results in a case of using the ink compositions 27 to 38 described in the Examples are shown in Table 10.
A: Linearity was high and the edge was rarely in disarray.
B: The edge portion of the straight line was slightly in disarray but was not mixed with the adjacent straight line.
C: There was significant bleeding and there were points mixed with the adjacent straight line.

### <Evaluation of Glossiness>

As an ink jet recording apparatus, a commercially available ink et printer (DMP-2831) was used. The obtained respective ink compositions were filled in the ink jet printer, and a monochrome solid image having a size of 10 cm×10 cm was produced on a polyvinyl chloride substrate (manufactured by Avery Denisson Corporation, AVERY 400 GLOSS WHITE PERMANENT) heated at 40°C. The produced printed article was dried at 60°C for 3 minutes and was thereafter exposed by a low-pressure mercury lamp under the condition of an energy of 1000 mJ/cm². Evaluation was performed by measuring the glossiness of the obtained solid image. Evaluation was performed using a glossmeter made by Sheen Instruments Ltd. at a measurement angle of 60° based on JIS Z8741. A grade of evaluation was given according to the following criteria. The evaluation results are shown in Table 10.
A: a degree of glossiness of 50 or higher
B: a degree of glossiness of 20 or higher and lower than 50
C: a degree of glossiness of lower than 20

The evaluation grades of B or higher are levels that can be allowed in practice.

### <Glossiness evaluation>

As an ink jet recording apparatus, a commercially available ink jet printer (manufactured by FUJIFILM Dimatix, DMP-2831) was prepared. The obtained respective ink compositions were filled in the ink jet printer, and a monochrome solid image having a size of 10 cm×10 cm was produced on a polyvinyl chloride substrate (manufactured by Avery Denisson Corporation, AVERY 400 GLOSS WHITE PERMANENT) heated at 40°C. The produced printed article was dried at 60°C for 3 minutes and was thereafter exposed by a low-pressure mercury lamp under the condition of an energy of 1000 mJ/cm2. Evaluation was performed on the obtained solid image using a glossmeter made by Sheen Instruments Ltd. at a measurement angle of 60° based on JIS Z8741. Evaluation was performed according to the following criteria. The evaluation results are shown in Table 12.

### -Evaluation Criteria-

A: a degree of glossiness of 100 or higher
B: a degree of glossiness of 90 or higher and lower than 100
C: a degree of glossiness of lower than 90

**[Table 9]**

| | | Ink evaluation | | | |
|---|---|---|---|---|---|
| | | Water resistance | Solvent resistance | Ink stability | Adhesion |
| Example 1 | Ink composition 1 | A | A | A | A |
| Example 2 | Ink composition 2 | A | A | A | A |
| Example 3 | Ink composition 3 | A | A | A | A |
| Example 4 | Ink composition 4 | B | A | B | A |
| Example 5 | Ink composition 5 | A | A | A | A |
| Example 6 | Ink composition 6 | A | A | A | A |
| Example 7 | Ink composition 7 | A | A | A | A |
| Example 8 | Ink composition 8 | A | B | A | B |
| Example 9 | Ink composition 9 | A | A | A | A |
| Example 10 | Ink composition 10 | A | A | A | A |
| Example 11 | Ink composition 11 | A | A | A | A |
| Example 12 | Ink composition 12 | A | A | A | A |
| Example 13 | Ink composition 13 | A | A | B | A |
| Example 14 | Ink composition 14 | A | A | B | A |
| Example 15 | Ink composition 15 | A | A | A | A |
| Example 16 | Ink composition 16 | A | B | A | A |
| Example 17 | Ink composition 17 | A | A | A | A |
| Example 18 | Ink composition 18 | A | A | A | A |
| Example 19 | Ink composition 19 | A | B | A | A |
| Example 20 | Ink composition 20 | A | B | A | A |
| Example 21 | Ink composition 21 | B | A | B | B |
| Example 22 | Ink composition 22 | A | B | A | A |
| Example 23 | Ink composition 23 | A | A | B | B |
| Comparative Example 1 | Ink composition 24 | A | C | A | A |
| Comparative Example 2 | Ink composition 25 | C | A | C | B |
| Comparative Example 3 | Ink composition 26 | C | A | C | C |

**[Table 10]**

| | | Ink evaluation | | | | | |
|---|---|---|---|---|---|---|---|
| | | Bleeding control | Solvent resistance | Water resistance | Adhesion | | Glossiness |
| | | | | | TP-188 | YP200 | |
| Example 24 | Ink composition 27 | A | A | A | A | B | A |
| Example 25 | Ink composition 28 | A | A | A | A | B | A |
| Example 26 | Ink composition 29 | A | A | A | A | B | A |
| Example 27 | Ink composition 30 | A | A | A | A | B | A |
| Example 28 | Ink composition 31 | B | A | A | A | A | A |
| Example 29 | Ink composition 32 | A | A | A | A | A | A |
| Example 30 | Ink composition 33 | A | A | A | A | A | A |
| Example 31 | Ink composition 34 | B | A | B | A | A | A |
| Example 32 | Ink composition 35 | A | A | A | A | A | A |
| Example 33 | Ink composition 36 | A | A | A | A | A | A |
| Example 34 | Ink composition 37 | A | A | A | A | A | A |
| Example 35 | Ink composition 38 | A | A | A | A | A | A |
| Example 36 | Ink composition 39 | A | A | A | A | A | A |
| Example 37 | Ink composition 40 | A | A | A | B | B | A |
| Example 38 | Ink composition 41 | A | A | A | B | B | A |
| Comparative Example 4 | Ink composition 42 | A | C | C | C | C | A |
| Comparative Example 5 | Ink composition 43 | C | C | A | C | C | C |
| Comparative Example 6 | Ink composition 44 | C | C | A | A | A | C |

**[Table 11]**

| | | Ink evaluation | | | |
|---|---|---|---|---|---|
| | | Water resistance | Solvent resistance | Ink stability | High-temperature blocking |
| Example 39 | Ink composition 42 | A | B | A | A |
| Example 40 | Ink composition 43 | B | A | B | A |
| Example 41 | Ink composition 44 | A | A | A | A |
| Example 42 | Ink composition 45 | A | A | A | A |
| Example 43 | Ink composition 46 | A | A | A | A |
| Example 44 | Ink composition 47 | A | A | A | A |
| Example 45 | Ink composition 48 | A | B | A | A |
| Example 46 | Ink composition 49 | A | A | A | A |
| Example 47 | Ink composition 50 | A | A | B | A |
| Example 48 | Ink composition 51 | B | A | A | B |
| Example 49 | Ink composition 52 | A | A | A | A |
| Comparative Example 7 | Ink composition 53 | A | C | A | A |
| Comparative Example 8 | Ink composition 54 | C | A | C | A |
| Comparative Example 9 | Ink composition 55 | A | B | A | C |

**[Table 12]**

| | Ink evaluation | | |
|---|---|---|---|
| | Water resistance | Solvent resistance | Glossiness |
| Example 50 | A | A | A |
| Example 51 | A | A | B |
| Example 52 | A | A | A |
| Example 53 | A | A | A |
| Example 54 | A | A | A |
| Example 55 | B | A | A |
| Example 56 | B | A | A |
| Example 57 | A | A | A |
| Example 58 | A | A | A |
| Example 59 | A | A | A |
| Example 60 | A | A | A |
| Example 61 | A | A | A |
| Example 62 | B | A | A |
| Example 63 | A | A | A |
| Example 64 | A | B | A |
| Example 65 | A | A | A |
| Example 66 | A | A | A |
| Example 10 | A | C | B |
| Example 11 | C | A | C |

As shown in Tables 9 to 12, it was seen that all the ink compositions in the Examples that contained (a) the specific copolymers could from an image with excellent water resistance, solvent resistance, adhesion to a recording medium, and glossiness compared to the ink compositions of the Comparative Examples. In addition, it was confirmed from the evaluation that the ink compositions of the Examples achieved such preservation stability that had no problem in practice.

In addition, as shown in Table 10, it was seen that all the ink compositions in the Examples 24 to 38 that contained the resin particles could form an image with excellent water resistance and solvent resistance, compared to the ink compositions of the Comparative Examples. In addition, it was seen that even in a polyethylene terephthalate film or synthetic paper which has poor adhesion to an ink image and is difficult to suppress bleeding, excellent adhesion to a recording medium and bleeding suppressing effects were exhibited.

## Claims

1. An ink composition comprising:
(a) a polymer compound which includes a repeating unit (a-1) having a partial structure expressed by the following General Formula (1), a repeating unit (a-2) which has a hydrophilic group and accounts for 8% to 25% by mass with respect to the total mass of the polymer compound, and a repeating unit (a-3) having a hydrophobic group, the polymer compound having a solubility parameter in an unneutralized state of 20.7 MPa^{1/2} to 23.0 Spa^{1/2};
(b) water; and
(c) a water-soluble organic solvent, 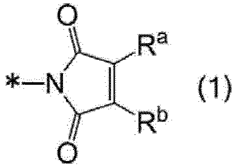 where, in the General Formula (1), R^{a} and R^{b} each independently represent a hydrogen atom or an alkyl group having 1 to 4 carbon atoms, and at least one of R^{a} and R^{b} represents an alkyl group having 1 to 4 carbon atoms, R^{a} and R^{b} may be bonded together and form a 4- to 6-membered alicyclic structure, and * represents a portion bonded to a main chain or a side chain in the polymer compound.

2. The ink composition according to claim 1,
wherein the repeating unit (a-3) having the hydrophobic group is a repeating unit having a partial structure expressed by the following General Formula (2-1) and/or a repeating unit having a partial structure expressed by the following General Formula (2-2),
*-Y-(CH₃)ₙ (2-1)
where, in the General Formula (2-1), Y represents an (n+1)-valent substituent, and n represents an integer of 2 to 5, 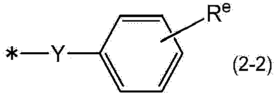 where, in the General Formula (2-2), Y represents a single bond or an alkylene group having 1 to 10 carbon atoms, the alkylene group may be substituted by an alkyl group having 1 to 4 carbon atoms or a hydroxyl group, and an ether bond, a urethane bond, or a ureylene bond may be included in the alkylene group, and R^{e} is a hydrogen atom or a linear or branched alkyl group having 1 to 9 carbon atoms.

3. The ink composition according to claim 2,
wherein Y in the General Formula (2-1) represents an (n+1)-valent substituent obtained by removing n hydrogen atoms from a linear or cyclic alkyl group.

4. The ink composition according to any one of claims 1 to 3,
wherein the repeating unit (a-2) having the hydrophilic group is a repeating unit having at least one type of hydrophilic group selected from an alcoholic hydroxyl group, an alkyl-substituted carbamoyl group, a carboxyl group, a sulfo group, and salts thereof.

5. The ink composition according to any one of claims 1 to 4,
wherein the repeating unit (a-2) having the hydrophilic group is a repeating unit having at least one type of hydrophilic group selected from a carboxyl group and salts thereof.

6. The ink composition according to any one of claims 1 to 5,
wherein the solubility parameter of (a) the polymer compound in the unneutralized state is 21.2 MPa^{1/2} to 22.8 MPa^{1/2}.

7. The ink composition according to any one of claims 1 to 6,
wherein the solubility parameter of (a) the polymer compound in the unneutralized state is 21.5 MPa^{1/2} to 22.5 MPa^{1/2}.

8. The ink composition according to any one of claims 1 to 7,
wherein the repeating unit (a-3) having the hydrophobic group is a repeating unit derived from alkyl (meth)acrylate having 4 to 22 carbon atoms.

9. The ink composition according to any one of claims 1 to 8,
wherein the repeating unit (a-1) having the partial structure expressed by the General Formula (1) is a repeating unit expressed by the following General Formula (3), 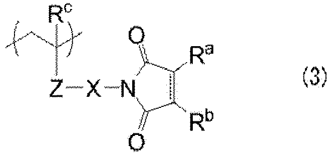 where, in the General Formula (3), R^{a} and R^{b} each independently represent a hydrogen atom or an alkyl group having 1 to 4 carbon atoms and at least one of R^{a} and R^{b} represents an alkyl group having 1 to 4 carbon atoms, R^{a} and R^{b} may be bonded together and form a 4- to 6-membered alicyclic structure, R^{c} represents a hydrogen atom or a methyl group, Z represents a single bond, -COO-**, or -CONR^{d}-**, R^{d} represents a hydrogen atom or an alkyl group having 1 to 4 carbon atoms, ** represents a position bonded to X, and X represents a divalent organic group.

10. The ink composition according to any one of claims 2 to 9,
wherein the repeating unit having the partial structure expressed by the General Formula (2-1) is a repeating unit expressed by the following General Formula (4), and the repeating unit having the partial structure expressed by the General Formula (2-2) is a repeating unit expressed by the following General Formula (5), 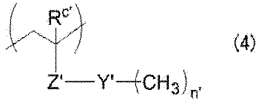 where, in the General Formula (4), R^{c'} represents a hydrogen atom or a methyl group, Z' is the same as Z in the General Formula (3), and Y' and n' are respectively the same as Y and n in the General Formula (2-1), 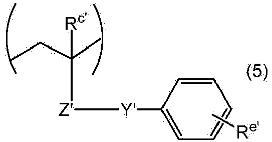 where, in the General Formula (5), R^{c'} represents a hydrogen atom or a methyl group, Z' represents -COO-** or -CONR^{d}-**, and Y' and R^{e'} are respectively the same as Y and R^{e} in the General Formula (2-2).

11. The ink composition according to any one of claims 1 to 10,
wherein a weight average molecular weight of (a) the polymer compound is 5000 to 150,000.

12. The ink composition according to any one of claims 1 to 11,
wherein the repeating unit (a-1) having the partial structure expressed by the General Formula (1) is included at 20% to 70% by mass with respect to the total mass of the polymer compound.

13. The ink composition according to any one of claims 1 to 12, further comprising:
(d) a colorant.

14. The ink composition according to any one of claims 1 to 13, further comprising:
(e) resin particles.

15. The ink composition according to claim 14,
wherein a content of (e) the resin particles is 0.2% to 10% by mass with respect to the total amount of the ink composition.

16. The ink composition according to claim 14 or 15,
wherein (e) the resin particles are urethane resin particles.

17. The ink composition according to claim 16,
wherein the urethane resin particles are polyester-based urethane resin particles or polyether-based urethane resin particles.

18. The ink composition according to any one of claims 14 to 17,
wherein a volume average particle diameter of (e) the resin particles is 20 to 200 nm.

19. The ink composition according to any one of claims 1 to 18, which is for ink jet recording.

20. An image forming method comprising:
imparting the ink composition according to any one of claims 1 to 19 onto a recording medium; and
irradiating the ink composition imparted onto the recording medium with active energy rays.

21. An image forming method comprising:
imparting the ink composition according to any one of claims 1 to 19 onto a recording medium;
drying the ink composition imparted onto the recording medium; and
irradiating the ink composition which is imparted onto the recording medium and is dried, with active energy rays.

22. A printed article comprising:
an image which is formed on an image recording medium, by the ink composition according to any one of claims 1 to 19, or according to the image forming method according to claim 20 or 21.

## Patentansprüche

1. Tintenzusammensetzung enthaltend:
(a) eine Polymerverbindung, die eine Wiederholungseinheit (a-1), die eine durch die folgende allgemeine Formel (1) dargestellte partielle Struktur aufweist, eine Wiederholungseinheit (a-2), die eine hydrophile Gruppe aufweist und 8% bis 25 Masse%, bezogen auf die Gesamtmasse der Polymerverbindung ausmacht, und eine Wiederholungseinheit (a-3), die eine hydrophobe Gruppe aufweist, enthält, wobei die Polymerverbindung einen Löslichkeitsparameter in einem unneutralisierten Zustand von 20,7 MPa^{1/2} bis 23,0 MPa^{1/2} hat,
(b) Wasser, und
(c) ein wasserlösliches organisches Lösungsmittel, 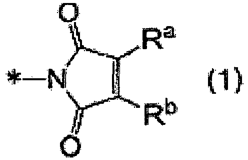 wobei in der allgemeinen Formel (1) R^{a} und R^{b} jeweils unabhängig ein Wasserstoffatom oder eine Alkylgruppe mit 1 bis 4 Kohlenstoffatomen darstellen und mindestens eines aus R^{a} und R^{b} eine Alkylgruppe mit 1 bis 4 Kohlenstoffatomen darstellt, R^{a} und R^{b} aneinander gebunden sein können und eine 4- bis 6-gliedrige alizyklische Struktur bilden, und * einen Teil darstellt, der an eine Hauptkette oder eine Seitenkette in der Polymerverbindung gebunden ist.

2. Tintenzusammensetzung nach Anspruch 1,
wobei die Wiederholungseinheit (a-3), die die hydrophobe Gruppe aufweist, eine Wiederholungseinheit ist, die eine durch die folgende allgemeine Formel (2-1) ausgedrückte partielle Struktur aufweist und/oder eine Wiederholungseinheit ist, die eine durch die folgende allgemeine Formel (2-2) ausgedrückte partielle Struktur aufweist,
*-Y(̵CH₃)ₙ (2-1)
wobei in der allgemeinen Formel (2-1) Y einen (n+1)-valenten Substituent darstellt und n eine ganze Zahl von 2 bis 5 darstellt, 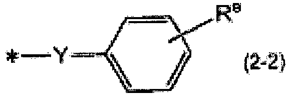 wobei in der allgemeinen Formel (2-2), Y eine Einzelbindung oder eine Alkylengruppe mit 1 bis 10 Kohlenstoffatomen darstellt, wobei die Alkylengruppe mit einer Alkylgruppe mit 1 bis 4 Kohlenstoffatomen oder einer Hydroxylgruppe substituiert sein kann, und eine Etherbindung, eine Urethanbindung oder eine Ureylenbindung in der Alkylengruppe enthalten sein kann und R^{e} ein Wasserstoffatom oder eine lineare oder verzweigte Alkylgruppe mit 1 bis 9 Kohlenstoffatomen ist.

3. Tintenzusammensetzung nach Anspruch 2,
wobei Y in der allgemeinen Formel (2-1) einen (n+1)-valenten Substituent darstellt, der durch Entfernen von n Wasserstoffatomen von einer linearen oder zyklischen Alkylgruppe erhalten ist.

4. Tintenzusammensetzung nach einem der Ansprüche 1 bis 3,
wobei die Wiederholungseinheit (a-2), die eine hydrophile Gruppe aufweist, eine Wiederholungseinheit ist, die mindestens einen Typ an hydrophiler Gruppe, ausgewählt aus einer alkoholischen Hydroxylgruppe, einer alkyl-substituierten Carbamoylgruppe, einer Carboxylgruppe, einer Sulfogruppe und Salzen davon, aufweist.

5. Tintenzusammensetzung nach einem der Ansprüche 1 bis 4,
wobei die Wiederholungseinheit (a-2), die die hydrophile Gruppe aufweist, eine Wiederholungseinheit ist, die mindestens einen Typ an hydrophiler Gruppe, ausgewählt aus einer Carboxylgruppe und Salzen davon, aufweist.

6. Tintenzusammensetzung nach einem der Ansprüche 1 bis 5,
wobei der Löslichkeitsparameter (a) der Polymerverbindung in dem unneutralisierten Zustand 21,2 MPa^{1/2} bis 22,8 MPa^{1/2} beträgt.

7. Tintenzusammensetzung nach einem der Ansprüche 1 bis 6,
wobei der Löslichkeitsparameter (a) der Polymerverbindung in dem unneutralisierten Zustand 21,5 MPa^{1/2} bis 22,5 MPa^{1/2} beträgt.

8. Tintenzusammensetzung nach einem der Ansprüche 1 bis 7,
wobei die Wiederholungseinheit (a-3), die die hydrophobe Gruppe aufweist, eine von Alkyl(meth)acrylat mit 4 bis 22 Kohlenstoffatomen abgeleitete Wiederholungseinheit ist.

9. Tintenzusammensetzung nach einem der Ansprüche 1 bis 8,
wobei die Wiederholungseinheit (a-1), die die durch die allgemeine Formel (1) ausgedrückte partielle Struktur aufweist, eine durch die folgende allgemeine Formel (3) ausgedrückte Wiederholungseinheit ist, 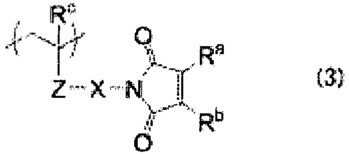 wobei in der allgemeinen Formel (3) R^{a} und R^{b} jeweils unabhängig ein Wasserstoffatom oder eine Alkylgruppe mit 1 bis 4 Kohlenstoffatomen darstellen und mindestens eines aus R^{a} und R^{b} eine Alkylgruppe mit 1 bis 4 Kohlenstoffatomen darstellt, R^{a} und R^{b} aneinander gebunden sein können und eine 4- bis 6-gliedrige alizyklische Struktur bilden, R^{c} ein Wasserstoffatom oder eine Methylgruppe darstellt, Z eine Einzelbindung, -COO-**, oder -CONR^{d}-** darstellt, R^{d} ein Wasserstoffatom oder eine Alkylgruppe mit 1 bis 4 Kohlenstoffatomen darstellt, ** eine Position darstellt, die an X gebunden ist und X eine divalente organische Gruppe darstellt.

10. Tintenzusammensetzung nach einem der Ansprüche 2 bis 9,
wobei die Wiederholungseinheit, die die durch die allgemeine Formel (2-1) ausgedrückte partielle Struktur aufweist, eine durch die folgende allgemeine Formel (4) ausgedrückte Wiederholungseinheit ist, und die Wiederholungseinheit, die die durch die allgemeine Formel (2-2) ausgedrückte partielle Struktur aufweist, eine durch die folgende allgemeine Formel (5) ausgedrückte Wiederholungseinheit ist, 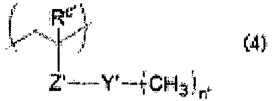 wobei in der allgemeinen Formel (4), R^{c'} ein Wasserstoffatom oder eine Methylgruppe darstellt, Z' dasselbe Z wie in der allgemeinen Formel (3) ist, und Y' und n' entsprechend dieselben sind wie Y und n in der allgemeinen Formel (2-1), 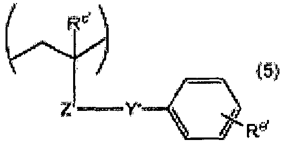 wobei in der allgemeinen Formel (5) R^{c'} ein Wasserstoffatom oder eine Methylgruppe darstellt, Z' -COO-** oder -CONR^{d}-** darstellt und Y' und R^{e'} entsprechend dieselben sind wie Y und R^{e} in der allgemeinen Formel (2-2).

11. Tintenzusammensetzung nach einem der Ansprüche 1 bis 10,
wobei ein gewichtsgemitteltes Molekulargewicht (a) der Polymerverbindung 5000 bis 150000 beträgt.

12. Tintenzusammensetzung nach einem der Ansprüche 1 bis 11,
wobei die Wiederholungseinheit (a-1), die eine durch die allgemeine Formel (1) ausgedrückte partielle Struktur aufweist, zu 20% bis 70 Masse%, bezogen auf die Gesamtmasse der Polymerverbindung, enthalten ist.

13. Tintenzusammensetzung nach einem der Ansprüche 1 bis 12, ferner enthaltend (d) ein Farbmittel.

14. Tintenzusammensetzung nach einem der Ansprüche 1 bis 13, ferner enthaltend (e) , Harzpartikel.

15. Tintenzusammensetzung nach Anspruch 14,
wobei ein Gehalt an (e) den Harzpartikeln 0,2% bis 10 Masse%, bezogen auf die Gesamtmenge der Tintenzusammensetzung, beträgt.

16. Tintenzusammensetzung nach Anspruch 14 oder 15,
wobei (e) die Harzpartikel Urethanharzpartikel sind.

17. Tintenzusammensetzung nach Anspruch 16,
wobei die Urethanharzpartikel polyesterbasierte Urethanharzpartikel oder polyetherbasierte Urethanharzpartikel sind.

18. Tintenzusammensetzung nach einem der Ansprüche 14 bis 17,
wobei ein volumendurchschnittlicher Partikeldurchmesser (e) der Harzpartikel 20 bis 200 nm beträgt.

19. Tintenzusammensetzung nach einem der Ansprüche 1 bis 18, die für Tintenstrahlaufzeichnung ist.

20. Bilderzeugungsverfahren umfassend:
Übermitteln der Tintenzusammensetzung nach einem der Ansprüche 1 bis 19 auf ein Aufzeichnungsmedium; und
Belichten der auf das Aufzeichnungsmedium übermittelten Tintenzusammensetzung mit aktiven Energiestrahlen.

21. Bilderzeugungsverfahren umfassend:
Übermitteln der Tintenzusammensetzung nach einem der Ansprüche 1 bis 19 auf ein Aufzeichnungsmedium;
Trocknen der auf das Aufzeichnungsmedium übermittelten Tintenzusammensetzung; und
Belichten der auf das Aufzeichnungsmedium übermittelten und getrockneten Tintenzusammensetzung mit aktiven Energiestrahlen.

22. Gedruckter Artikel umfassend:
ein Bild, das durch die Tintenzusammensetzung nach einem der Ansprüche 1 bis 19 auf einem Bildaufzeichnungsmedium, oder gemäß dem Bilderzeugungsverfahren nach Anspruch 20 oder 21 erzeugt ist.

## Revendications

1. Composition d'encre, comprenant :
(a) un composé polymère, lequel inclut un motif répété (a-1) présentant une structure partielle exprimée par la formule générale suivante (1), un motif répété (a-2) qui présente un groupe hydrophile et représente de 8 % à 25 % en masse par rapport à la masse totale du composé polymère, et un motif répété (a-3) présentant un groupe hydrophobe, le composé polymère présentant un paramètre de solubilité dans un état non neutralisé allant de 20,7 MPa^{1/2} à 23,0 MPa^{1/2}.
(b) de l'eau, et
(c) un composé organique soluble dans l'eau, 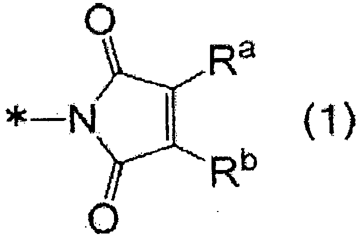 où, dans la formule générale (1), R^{a} et R^{b} représentent chacun indépendamment un atome d'hydrogène ou un groupe alkyle présentant de 1 à 4 atomes de carbone ; au moins un élément parmi R^{a} et R^{b} représente un groupe alkyle présentant de 1 à 4 atomes de carbone ; R^{a} et R^{b} peuvent être liés ensemble et forment une structure alicyclique de 4 à 6 chaînons ; et * représente une portion liée à une chaîne principale ou une chaîne latérale dans le composé polymère.

2. Composition d'encre selon la revendication 1,
dans laquelle le motif répété (a-3) présentant le groupe hydrophobe est un motif répété présentant une structure partielle exprimée par la formule générale suivante (2-1), et/ou un motif répété présentant une structure partielle exprimée par la formule générale suivante (2-2),
*-Y(̵CH₃)ₙ (2-1)
où, dans la formule générale (2-1), Y représente un substituant de valence (n+1), et n représente un entier égal à 2 jusqu'à 5, 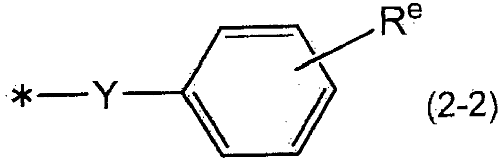 où, dans la formule générale (2-2), Y représente une liaison simple ou un groupe alkylène présentant de 1 à 10 atomes de carbone ; le groupe alkylène peut être substitué par un groupe alkyle présentant de 1 à 4 atomes de carbone ou un groupe hydroxyle ; une liaison éther, une liaison uréthane, ou une liaison uréylène peut être incluse dans le groupe alkylène, et R^{e} est un atome d'hydrogène ou un groupe alkyle linéaire ou ramifié présentant de 1 à 9 atomes de carbone.

3. Composition d'encre selon la revendication 2,
dans laquelle dans la formule générale (2-1), Y représente un substituant de valence (n+1) obtenu en enlevant n atomes d'hydrogène d'un groupe alkyle linéaire ou cyclique.

4. Composition d'encre selon l'une quelconque des revendications 1 à 3,
dans laquelle le motif répété (a-2) présentant le groupe hydrophile est un motif répété présentant au moins un type de groupe hydrophile sélectionné parmi un groupe hydroxyle alcoolique, un groupe carbomoyle à substitution alkyle, un groupe carboxyle, un groupe sulfo, et des sels de ceux-ci.

5. Composition d'encre selon l'une quelconque des revendications 1 à 4,
dans laquelle le motif répété (a-2) présentant le groupe hydrophile est un motif répété présentant au moins un type de groupe hydrophile sélectionné parmi un groupe carboxyle et des sels de celui-ci.

6. Composition d'encre selon l'une quelconque des revendications 1 à 5,
dans laquelle le paramètre de solubilité du composé polymère (a) dans l'état non neutralisé s'étend de 21,2 MPa^{1/2} à 22,8 MPa^{1/2}.

7. Composition d'encre selon l'une quelconque des revendications 1 à 6,
dans laquelle le paramètre de solubilité du composé polymère (a) dans l'état non neutralisé s'étend de 21,5 MPa^{1/2} à 22,5 MPa^{1/2}.

8. Composition d'encre selon l'une quelconque des revendications 1 à 7,
dans laquelle le motif répété (a-3) présentant le groupe hydrophobe est un motif répété dérivé du (méth)acrylate d'alkyle présentant de 4 à 22 atomes de carbone.

9. Composition d'encre selon l'une quelconque des revendications 1 à 8,
dans laquelle le motif répété (a-1) présentant la structure partielle exprimée par la formule générale suivante (1) est un motif répété exprimé par la formule générale suivante (3) : 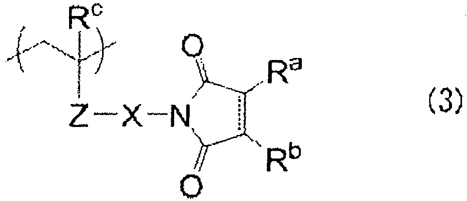 où, dans la formule générale (3), R^{a} et R^{b} représentent chacun indépendamment un atome d'hydrogène ou un groupe alkyle présentant de 1 à 4 atomes de carbone ; au moins un parmi R^{a} et R^{b} représente un groupe alkyle présentant de 1 à 4 atomes de carbone ; R^{a} et R^{b} peuvent être liés ensemble et forment une structure alicyclique de 4 à 6 chaînons ; R^{c} représente un atome d'hydrogène ou un groupe méthyle ; Z représente une liaison simple, -COO-**, ou -CONR^{d}-**; R^{d} représente un atome d'hydrogène ou un groupe alkyle présentant de 1 à 4 atomes de carbone ; ** représente une position liée à X, et X représente un groupe organique divalent.

10. Composition d'encre selon l'une quelconque des revendications 2 à 9,
dans laquelle le motif répété présentant la structure partielle exprimée par la formule générale (2-1) est un motif répété exprimé par la formule générale suivante (4), et le motif répété présentant la structure partielle exprimée par la formule générale (2-2) est un motif répété exprimé par la formule générale suivante (5) : 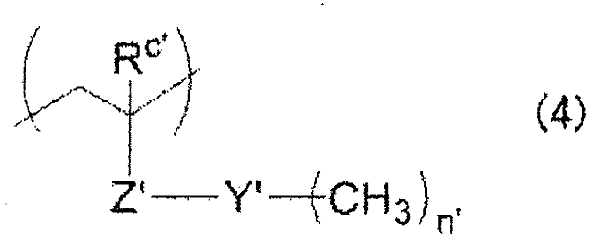 où, dans la formule générale (4), R^{c'} représente un atome d'hydrogène ou un groupe méthyle ; Z' est identique à Z de la formule générale (3), et Y' et n' sont respectivement identiques à Y et n de la formule générale (2-1), 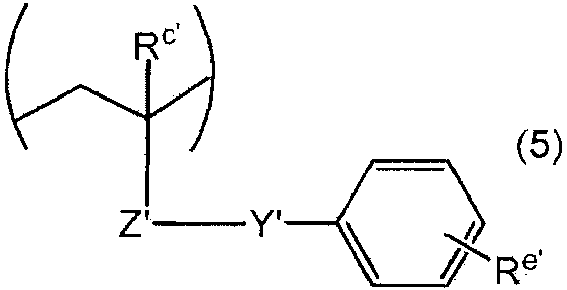 où, dans la formule générale (5), R^{c'} représente un atome d'hydrogène ou un groupe méthyle, Z' représente -COO-**, ou -CONR^{d}-**, et Y' et R^{e'} sont respectivement identiques à Y et R^{e} dans la formule générale (2-2).

11. Composition d'encre selon l'une quelconque des revendications 1 à 10,
dans laquelle un poids moléculaire moyen en poids du composé polymère (a) s'étend de 5000 à 150 000.

12. Composition d'encre selon l'une quelconque des revendications 1 à 11,
dans laquelle le motif répété (a-1) présentant la structure partielle exprimée par la formule générale (1) est inclus pour 20 % à 70 % en masse par rapport à la masse totale du composé polymère.

13. Composition d'encre selon l'une quelconque des revendications 1 à 12, comprenant en outre :
(d) un colorant.

14. Composition d'encre selon l'une quelconque des revendications 1 à 13, comprenant en outre :
(e) des particules de résine.

15. Composition d'encre selon la revendication 14,
dans laquelle une teneur des particules de résine (e) s'étend de 0,2 % à 10 % en masse par rapport à la quantité totale de la composition d'encre.

16. Composition d'encre selon la revendication 14 ou 15,
dans laquelle les particules de résine (e) sont des particules de résine d'uréthane.

17. Composition d'encre selon la revendication 16,
dans laquelle les particules de résine d'uréthane sont des particules de résine d'uréthane à base de polyester ou des particules de résine d'uréthane à base de polyéther.

18. Composition d'encre selon l'une quelconque des revendications 14 à 17,
dans laquelle un diamètre de particule moyen en volume des particules de résine (e) s'étend de 20 à 200 *nm.

19. Composition d'encre selon l'une quelconque des revendications 1 à 18, laquelle est destinée à l'enregistrement par jet d'encre.

20. Procédé de formation d'image, comprenant les étapes consistant à :
appliquer la composition d'encre selon l'une quelconque des revendications 1 à 19 sur un support d'enregistrement, et
irradier la composition d'encre appliquée sur le support d'enregistrement avec un rayonnement d'énergie active.

21. Procédé de formation d'image, comprenant les étapes consistant à :
appliquer la composition d'encre selon l'une quelconque des revendications 1 à 19 sur un support d'enregistrement ;
sécher la composition d'encre appliquée sur le support d'enregistrement, et
irradier la composition d'encre, appliquée sur le support d'enregistrement et séchée, avec un rayonnement d'énergie active.

22. Article imprimé comprenant :
une image formée sur un support d'enregistrement d'image, par la composition d'encre selon l'une quelconque des revendications 1 à 19, ou conformément au procédé de formation d'image selon la revendication 20 ou 21.
